(19) Europäisches Patentamt
European Patent Office
Office européen des brevets

(11) Publication number: 0 014 386
A2

# (12) EUROPEAN PATENT APPLICATION

(21) Application number: 80100354.2

(22) Date of filing: 23.01.80

(51) Int. Cl.[3]: C 07 F 9/24
A 01 N 57/26

(30) Priority: 24.01.79 US 5937
25.05.79 US 42689
11.12.79 US 102471
11.12.79 US 102472

(43) Date of publication of application:
20.08.80 Bulletin 80/17

(84) Designated Contracting States:
AT BE CH DE FR GB IT NL SE

(71) Applicant: Rohm and Haas Company
Independence Mall West
Philadelphia, Pennsylvania 19105(US)

(72) Inventor: Ollinger, Janet
23 Edinboro Circle
Chalfont, Pa. 18914(US)

(72) Inventor: Fitzpatrick, Joseph Michael
607 McKean Road
Ambler, Pa. 19002(US)

(74) Representative: Deufel, Paul et al,
Patentanwälte MÜLLER-BORé-DEUFEL SCHÖN-HERTEL
Siebertstrasse 4
D-8000 München 86(DE)

## (54) Phosphoramido(di)thioate derivatives, processes for their preparation and pesticidal compositions containing them, as well as intermediates.

(57) Novel phosphorodiamido (di) thioate derivatives, pesticidal compositions containing them, processes for preparing the derivatives and the use thereof for combating pests.

Novel compounds are provided which exhibit activity as pesticides for combating fungi, arthropods and/or nematodes. The novel compounds have the formula:

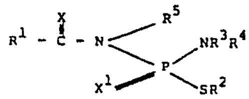

wherein

$R^1$ is hydrogen; $C_1$-$C_{12}$ alkyl; $C_1$-$C_{12}$ alkyl substituted with various defined substituents; $C_3$-$C_{12}$ alkynyl; $C_2$-$C_{12}$alkenyl; $C_4$-$C_{17}$alkadienyl; $C_3$-$C_6$cycloalkyl; ($C_1$-$C_6$alkoxy) carbonyl; phenyl; phenyl$C_1$-$C_4$alkyl; phenyl or phenyl$C_1$-$C_5$alkyl each ring-substituted with various defined substituents;

$R^2$ is $C_2$-$C_6$alkyl;

$R^3$ (when not joined to $R^5$) is hydrogen, $C_1$-$C_3$ alkyl or $C_3$-$C_6$ alkenyl;

$R^4$ is hydrogen, $C_1$-$C_3$alkyl or $C_3$-$C_6$alkenyl;

$R^5$ (when not joined to $R^3$) is hydrogen; $C_1$-$C_{12}$-alkyl; $C_1$-$C_{12}$ alkyl substituted with various defined substituents; $C_3$-$C_{12}$ alkynyl; $C_3$-$C_{12}$-alkenyl; $C_3$-$C_6$ cycloalkyl; phenyl; phenyl$C_1$-$C_5$alkyl; phenyl or phenyl$C_1$-$C_5$ alkyl each ring-substituted with various defined substituents;

$R^3$ and $R^5$ (when joined together) can be taken together to form a heterocyclic ring of the formula:

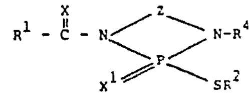

wherein

Z is a $-CH_2CH_2-$ group, a $-CH_2CH_2CH_2-$ group, or $-CH_2CH_2CH_2CH_2-$ group;

X is oxygen or sulfur; and

$X^1$ is oxygen or sulfur.

EP 0 014 386 A2

PATENTANWÄLTE
MÜLLER-BORÉ · DEUFEL
SCHÖN · HERTEL
8 MÜNCHEN 86 · SIEBERTSTR. 4
TEL. (089) 47 40 05 · TELEX 5-24 85

TITLE MODIFIED
see front page

S/R 14-232 EU



Novel Phosphoramido(di)thioate Derivatives, Pesticidal Compositions Containing Them, Processes for Preparing the Novel Derivatives and the Use of the Novel Derivatives for Combating Pests

This invention concerns the provision of novel pesticidal phosphoroamido(di)thioate derivatives, particularly for combating pests in the form of one or more of the pests classed as fungi, arthropods and nematodes, particularly acarids, insects and nematodes.

Certain phosphoroamidothioate derivatives have already been disclosed as having fungicidal, arthropodicidal and/or nematicidal activity (vide West German Offenlegungsschrift No. 2,657,972).

The present invention provides novel phosphorodiamido(di)-thioate derivatives having, in one or more respects, unexpected biological activity having regard to that of previously known phosphoroamidothioate derivatives. The novel phosphorodiamido(di)thioate derivatives of the invention are particularly noteworthy in respect of their nematicidal and/or systemic insecticidal properties.

Most of the novel compounds of this invention are of the formula:

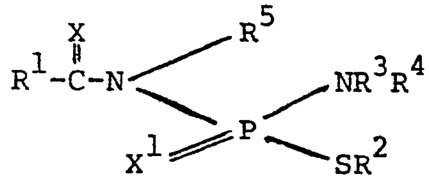

(I)

wherein $R^1$ is hydrogen; $C_1$-$C_{12}$alkyl; $C_1$-$C_{12}$alkyl substituted with up to three of the same or different substituents selected from chloro, bromo and fluoro; $C_1$-$C_{12}$alkyl substituted with one substituent selected from cyano, nitro, $C_1$-$C_6$ alkoxy, $C_1$-$C_6$alkylthio, $C_1$-$C_6$alkylsulfinyl, $C_1$-$C_6$alkylsulfonyl, ($C_1$-$C_6$alkyl)carbonyl, ($C_1$-$C_6$alkoxy)carbonyl, ($C_1$-$C_6$alkyl)carbonyloxy, mono- or di-($C_1$-$C_6$alkyl)aminocarbonyl, phenoxy, phenylthio, phenylsulfinyl, phenylsulfonyl, phenylcarbonyl, phenoxycarbonyl, phenylcarbonyloxy, phenylaminocarbonyl, ($C_3$-$C_6$alkenyl)oxycarbonyl, ($C_3$-$C_6$alkenyl)carbonyloxy, aminocarbonyl, and ($C_1$-$C_6$alkyl)carbonylamino; $C_3$-$C_{12}$alkynyl, preferably $C_3$-$C_6$, more preferably $C_3$-$C_4$; $C_2$-$C_{12}$alkenyl, preferably $C_3$-$C_6$, more preferably $C_3$-$C_4$; $C_4$-$C_{17}$alkadienyl; $C_3$-$C_6$cycloalkyl; ($C_1$-$C_6$alkoxy)carbonyl, preferably having not more than 4, and more preferably having not more than 2, carbon atoms in the alkoxy moiety; phenyl; phenyl$C_1$-$C_5$alkyl, preferably phenyl$C_1$-$C_3$alkyl and more preferably benzyl; phenyl or phenyl$C_1$-$C_5$alkyl (preferably phenyl$C_1$-$C_3$alkyl and more preferably benzyl) each phenyl or phenylalkyl group being ring-substituted with up to three of the same or different substituents selected from cyano, nitro, halogen, $C_1$-$C_6$alkyl, $C_1$-$C_6$alkoxy, $C_1$-$C_6$ alkylthio, $C_1$-$C_6$alkylsulfinyl, $C_1$-$C_6$alkylsulfonyl, phenoxy, $C_1$-$C_6$haloalkyl, trifluoromethyl, mono- or di-($C_1$-$C_6$alkyl)aminocarbonyl, ($C_1$-$C_6$alkoxy)carbonyl, ($C_1$-$C_6$alkyl)carbonyl, ($C_1$-$C_6$alkyl)carbonyloxy, phenylthio, phenylsulfinyl, phenylsulfonyl, benzyl, phenylcarbonyl, phenoxycarbonyl, phenylcarbonyloxy, phenylaminocarbonyl, ($C_3$-$C_6$alkenyl)oxycarbonyl, ($C_3$-$C_6$alkenyl)carbonyloxy, aminocarbonyl and ($C_1$-$C_6$alkyl)carbonylamino;

$R^2$ is $C_2$-$C_6$alkyl, preferably $C_2$-$C_4$ and more preferably $C_3$-$C_4$;

$R^3$ (when not joined to $R^5$) is hydrogen, $C_1$-$C_3$alkyl, preferably methyl or ethyl (more preferably methyl) or $C_3$-$C_6$alkenyl, preferably propenyl;

$R^4$ is hydrogen, $C_1$-$C_3$alkyl, preferably methyl or ethyl (more preferably methyl) or, particularly when $R^3$ and $R^5$ are not joined, $C_3$-$C_6$alkenyl, preferably propenyl;

$R^5$ (when not joined to $R^3$) is hydrogen; $C_1$-$C_{12}$alkyl, preferably $C_1$-$C_6$, more preferably $C_1$-$C_4$ and most preferably methyl or ethyl; $C_1$-$C_{12}$alkyl substituted with one substituent selected from cyano, nitro, $C_1$-$C_6$alkoxy, $C_1$-$C_6$alkylthio, $C_1$-$C_6$alkylsulfinyl, $C_1$-$C_6$alkylsulfonyl, ($C_1$-$C_6$alkyl)carbonyl, ($C_1$-$C_6$alkoxy)carbonyl, ($C_1$-$C_6$alkyl)carbonyloxy, mono- or di-($C_1$-$C_6$alkyl) aminocarbonyl, phenoxy, phenylthio, phenylsulfinyl, phenylsulfonyl, phenylcarbonyl, phenoxycarbonyl, phenylcarbonyloxy, phenylaminocarbonyl, ($C_3$-$C_6$alkenyl)oxycarbonyl, ($C_3$-$C_6$alkenyl)carbonyloxy, aminocarbonyl and ($C_1$-$C_6$alkyl)carbonylamino; $C_3$-$C_{12}$alkynyl (e.g. $C_3$-$C_8$alkynyl), preferably $C_3$-$C_6$ and more preferably $C_3$-$C_4$; $C_3$-$C_{12}$alkenyl, preferably $C_3$-$C_6$ and more preferably $C_3$-$C_4$; $C_3$-$C_6$cycloalkyl, preferably $C_5$-$C_6$; phenyl; phenyl$C_1$-$C_5$alkyl, preferably phenyl$C_1$-$C_3$alkyl; phenyl or phenyl$C_1$-$C_5$alkyl each ring-substituted with up to three of the same or different substituents selected from cyano, nitro, halogen (particularly chloro, bromo and fluoro), $C_1$-$C_6$alkyl, $C_1$-$C_6$alkoxy, $C_1$-$C_6$alkylthio, $C_1$-$C_6$alkylsulfinyl, $C_1$-$C_6$alkylsulfonyl, phenoxy, $C_1$-$C_6$haloalkyl (particularly trifluoromethyl), mono- or di-($C_1$-$C_6$alkyl) aminocarbonyl, ($C_1$-$C_6$alkoxy)carbonyl, ($C_1$-$C_6$ alkyl)carbonyl, ($C_1$-$C_6$alkyl)carbonyloxy, phenylthio, phenylsulfinyl, phenylsulfonyl,

benzyl, phenylcarbonyl, phenoxycarbonyl, phenylcarbonyloxy, phenylaminocarbonyl, $(C_3-C_6alkenyl)oxycarbonyl$, $(C_3-C_6alkenyl)carbonyloxy$, aminocarbonyl, or $(C_1-C_6alkyl)carbonylamino$ groups;

$R^3$ and $R^5$ (when joined together) form a heterocyclic ring of the formula:

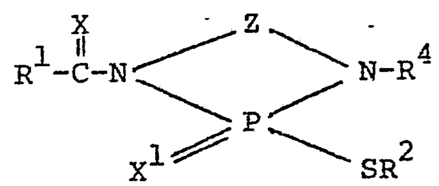

(II)

wherein Z is $-CH_2CH_2-$, $-CH_2CH_2CH_2-$ or $-CH_2CH_2CH_2CH_2-$, preferably $-CH_2CH_2-$ or $-CH_2CH_2CH_2-$;

X is oxygen or sulfur, preferably oxygen; and

$X^1$ is oxygen or sulfur, preferably oxygen.

When $R^1$ is $C_1-C_{12}alkyl$, it is preferably $C_1-C_6alkyl$, more preferably $C_1-C_4alkyl$, and most preferably methyl or ethyl.

When $R^1$ is halo$(C_1-C_{12})$alkyl, it is preferably halo$(C_1-C_6)$ alkyl and more preferably trifluoromethyl.

When $R^1$ is substituted alkyl, it is preferably $C_1-C_6alkyl$ substituted with one substituent selected from cyano, nitro, $C_1-C_4alkoxy$, $C_1-C_4alkylthio$, $C_1-C_4alkylsulfinyl$, $C_1-C_4alkylsulfonyl$, acetyl, $(C_1-C_4alkoxy)carbonyl$, $(C_1-C_4alkyl)carbonyloxy$, mono- or di-$(C_1-C_4alkyl)aminocarbonyl$, phenoxy, phenylthio, phenylsulfinyl, phenylsulfonyl, phenylcarbonyl, phenoxycarbonyl, phenylcarbonyloxy, phenylaminocarbonyl, $(C_3-C_4alkenyl)oxycarbonyl$, $(C_3-C_4alkenyl)carbonyloxy$, aminocarbonyl, and $(C_1-C_4alkyl)carbonylamino$. When the alkyl group contains a substituent having an alkyl moiety such moiety typically has 1 or 2 carbon atoms. When $R^1$ is substituted alkyl, it is even more preferably $C_1-C_4alkyl$ substituted with one substituent selected from cyano, nitro, methoxy, methylthio, methylsulfinyl, methylsulfonyl, acetyl, methoxycarbonyl, ethoxycarbonyl, methylcarbonyloxy, mono- or

di-methylaminocarbonyl, phenoxy, phenylthio, phenylsulfinyl, phenylsulfonyl, phenylcarbonyl, phenoxycarbonyl, phenylcarbonyloxy, phenylaminocarbonyl, ($C_3$-$C_4$alkenyl)oxycarbonyl, ($C_3$-$C_4$alkenyl)carbonyloxy, aminocarbonyl and methylcarbonylamino.

While $R^1$ can be substituted phenyl or phenylalkyl, it is preferred that, of these two possibilities, $R^1$ is phenyl substituted with up to three substituents selected from cyano, nitro, methyl, methoxy, phenoxy, acetoxy, acetyl, trifluoromethyl, chloro, fluoro, bromo, methylthio, methylsulfinyl and methylsulfonyl.

When $R^5$ is substituted alkyl it is preferably $C_1$-$C_6$alkyl substituted with one substituent selected from cyano, nitro, $C_1$-$C_4$alkoxy, $C_1$-$C_4$alkylthio, $C_1$-$C_4$alkylsulfinyl, $C_1$-$C_4$alkylsulfonyl, acetyl, ($C_1$-$C_4$alkoxy)carbonyl, ($C_1$-$C_4$alkyl)carbonyloxy, mono- or di-($C_1$-$C_4$alkyl)aminocarbonyl, phenoxy, phenylthio, phenylsulfinyl, phenylsulfonyl, phenylcarbonyl, phenoxycarbonyl, phenylcarbonyloxy, phenylaminocarbonyl, ($C_3$-$C_4$alkenyl)oxycarbonyl, ($C_3$-$C_4$alkenyl)carbonyloxy, aminocarbonyl, and ($C_1$-$C_4$alkyl)carbonylamino. When the alkyl group contains a substituent having an alkyl moiety such moiety typically contains 1 or 2 carbon atoms. When $R^5$ is substituted alkyl, it is even more preferably $C_1$-$C_4$alkyl substituted with one substituent selected from cyano, nitro, methoxy, methylthio, methylsulfinyl, methylsulfonyl, acetyl, methoxycarbonyl, ethoxycarbonyl, methylcarbonyloxy, mono- or dimethylaminocarbonyl, phenoxy, phenylthio, phenylsulfinyl, phenylsulfonyl, phenylcarbonyl, phenoxycarbonyl, phenylcarbonyloxy, phenylaminocarbonyl, ($C_3$-$C_4$alkenyl)oxycarbonyl, ($C_3$-$C_4$alkenyl)carbonyloxy, aminocarbonyl and methylcarbonylamino.

While $R^5$ can be substituted phenyl or phenylalkyl, it is preferred that of these two possibilities, $R^5$ is phenyl substituted with up to three substituents selected from cyano, nitro, methyl, methoxy, phenoxy, acetoxy, acetyl, trifluoromethyl, chloro, fluoro, bromo, methylthio, methylsulfinyl and methylsulfonyl.

When the compounds of this invention contain a phenyl group containing a substituent having an alkyl moiety such moiety will usually contain not more than 4 carbon atoms and, more usually, 1 or 2 carbon atoms.

The alkyl, alkenyl and alkynyl moieties present in the compounds of the invention may have branched or straight chains. Representative examples of such moieties include methyl, ethyl, propyl, isopropyl, sec-butyl, isobutyl, tert-butyl, pentyl, neopentyl, hexyl, allyl, 2-butenyl, 3-methyl-1-pentenyl, 3-hexenyl, propynyl, 1-pentynyl, 4-methyl-1-pentynyl, hexynyl, nonyl and dodecyl.

The alkenyl groups, e.g. allyl, present in the compounds of the invention contain one cis or trans double bond.

Any alkynyl group, e.g. propargyl, present in the compounds of the invention contains one triple bond.

Typical phenylalkyl groups are groups such as benzyl, phenethyl and 3-phenyl-1-methylpropyl, the aromatic rings of which may be substituted as described above.

Any alkadienyl group, e.g. 2,4-pentadienyl, present in the compounds of the invention can have either cis or trans double bonds which can be either conjugated or isolated.

Where the term acyl is used in this specification, there is meant a group of the formula R'C(X') wherein R' is hydrogen or an organic group and X' is oxygen or sulfur.

Representative N-acyl compounds of the invention, of which preparative and other data are given later, are those of Formula I, wherein $R^1$ is $C_1$-$C_9$alkyl, $C_1$-$C_3$haloalkyl, methoxy-

carbonyl, methoxymethyl, ($C_1$-$C_2$alkoxy)carbonyl$C_1$-$C_2$alkyl, phenoxymethyl, phenyl optionally substituted with nitro or halo, phenyl$C_1$-$C_2$alkyl, $C_3$-$C_6$cycloalkyl, $C_{17}$alkadienyl or $C_3$alkenyl; $R^2$ is $C_2$-$C_5$alkyl; $R^3$ is $C_1$-$C_2$alkyl or $C_3$alkenyl; $R^4$ is hydrogen or methyl; and $R^5$ is $C_1$-$C_2$alkyl or $C_3$alkenyl.

The most preferred compounds of this invention possess especially enhanced nematicidal, acaricidal, fungicidal and arthropodicidal, particularly nematicidal, acaricidal and insecticidal activity. They can be represented by the formula:

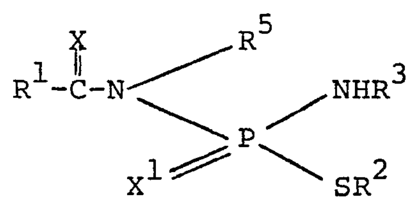

(III)

wherein $R^1$ is hydrogen, methyl, ethyl, methoxymethyl, cyclopropyl or trifluoromethyl;

$R^2$ is $C_3$-$C_4$alkyl;

$R^3$ is methyl;

$R^5$ is hydrogen, methyl or ethyl, preferably methyl;

X is sulfur or oxygen, preferably oxygen; and

$X^1$ is sulfur or oxygen, preferably oxygen.

Particular preferred compounds have the following formulae:

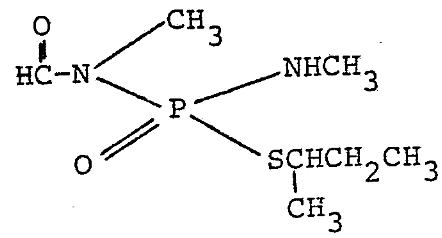

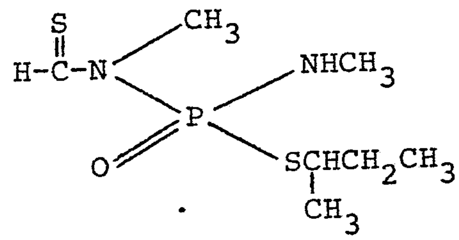

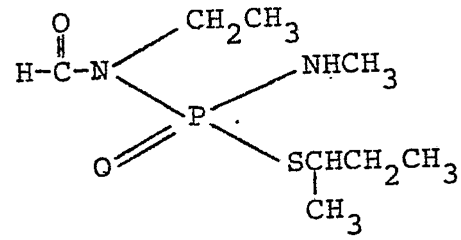

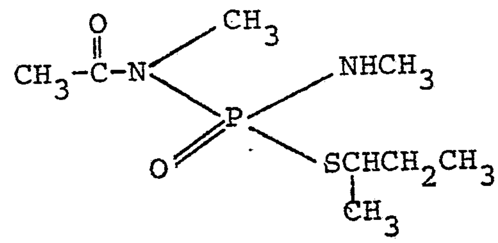

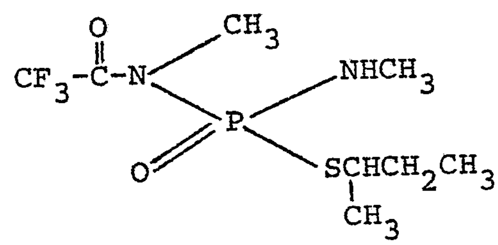

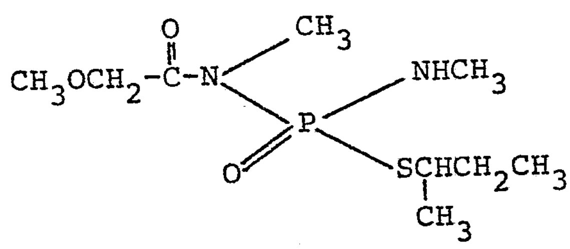

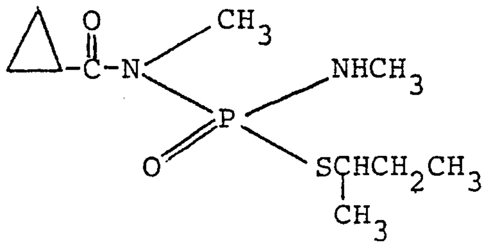

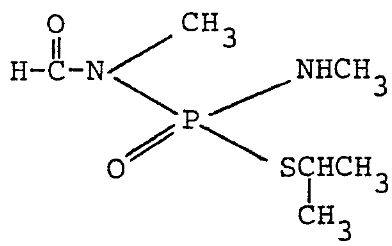

Typical examples of compounds within the scope of this invention include the following:

1 N-Ethyl N'-methyl N-acetyl S-(1-methylpropyl) phosphorodiamidothioate

2 N-Hexyl N-hexylcarbonyl N',N'-dimethyl S-propyl phosphorodiamidothioate

3 N-Formyl N,N'-dimethyl S-ethyl phosphorodiamidothioate

4 N,N'-Diethyl N-ethylcarbonyl S-(2-methylpropyl) phosphorodiamidothioate

5 N-Ethylcarbonyl N,N'-dimethyl S-(1-methylethyl) phosphorodiamidothioate

6 N,N'-Diethyl N-formyl S-propyl phosphorodiamidothioate

7 N-Formyl N,N'-dipropyl S-(1-methylpropyl) phosphorodiamidothioate

8 S-Butyl N',N'-diethyl N-acetyl N-propyl phosphorodiamidothioate

9 N-Dodecylcarbonyl N,N'-dimethyl S-propyl phosphorodiamidothioate

10 N-Chloroacetyl N,N'-diethyl S-(1-methylpropyl) phosphorodiamidothioate

11 N-Formyl N',N'-dimethyl S-hexyl N-propyl phosphorodiamidothioate

12 N-Formyl S-hexyl N',N'-dimethyl N-[3-(methylsulfonyl)-propyl] phosphorodiamidothioate

13 N',N'-Diethyl N-acetyl S-(2-methylpropyl) N-(2-propenyl)

phosphorodiamidothioate

14 N-(2-Cyanoethyl) S-ethyl N-ethylcarbonyl N',N'-dimethyl phosphorodiamidothioate

15 N-(2-Butynyl) N-formyl N',N'-dimethyl S-propyl phosphorodiamidothioate

16 N-(2-Methoxyethyl) N',N'-dimethyl N-acetyl S-propyl phosphorodiamidothioate

17 N',N',S-Triethyl N-formyl N-[2-(methylthio)ethyl] phosphorodiamidothioate

18 N- [(2-Ethoxycarbonyl)ethyl] N'-ethyl N-formyl S-(2-methylbutyl) phosphorodiamidothioate

19 N-Cyclohexyl N',N',S-triethyl N-acetyl phosphorodiamidothioate

20 N-(2-Propenylcarbonyl) N,N',N',S-tetrapropyl phosphorodiamidothioate

21 N-(3-Dodecenyl)carbonyl N',N'-diethyl S-pentyl N-propyl phosphorodiamidothioate

22 S-Hexyl N-(2-hexenylcarbonyl) N,N',N-trimethyl phosphorodiamidothioate

23 N,N'-Diethyl N-(2-propynylcarbonyl) S-propyl phosphorodiamidothioate

24 S-Butyl N-(3-hexynyl)carbonyl N-pentyl N',N'-dipropyl phosphorodiamidothioate

25 N-Cyclopropylcarbonyl N,S-diethyl N',N'-dimethyl phosphorodiamidothioate

26 N-Cyclohexylcarbonyl N,N'-dimethyl S-pentyl phosphorodiamidothioate

27 N,N'-Diethyl N-phenylcarbonyl S-propyl phosphorodiamidothioate

28 N-Benzylcarbonyl N,N',S-tripropyl phosphorodiamidothioate

29 S-Ethyl N,N'-dimethyl N-(5-phenylpentyl)carbonyl phosphorodiamidothioate

30 N,N'-Dimethyl S-(1-methylpropyl) N-(4-nitrophenyl)carbonyl phosphorodiamidothioate

31 N-Dodecylthiocarbonyl N,N'-diethyl S-propyl phosphorodiamidothioate

32 N-Hexylthiocarbonyl N,N'-dimethyl S-propyl phosphorodiamidothioate

33 N- [(2-Ethoxycarbonylpropyl)carbonyl] N,N'-dimethyl S-(1-methylpropyl) phosphorodiamidothioate

34 N,N'-Diethyl N-(2-methoxyethylcarbonyl) S-propyl phosphorodiamidothioate

35 N-Thioformyl N,N'-dimethyl S-(1-methylpropyl) phosphorodiamidothioate

36 N,N'-Dimethyl S(1-methylpropyl) N-trifluoromethylthiocarbonyl phosphorodiamidothioate

37 N,N'-Dimethyl N-thioacetyl S-propyl phosphorodiamidothioate

38 N,N'-Dimethyl S-propyl N-propylthiocarbonyl phosphorodiamidothioate

39 N-Methylthiomethylthiocarbonyl N,N',S-tripropyl phosphorodiamidothioate

40 N-Cyanoacetyl N,N'-dimethyl S-(1-methylpropyl) phosphorodiamidothioate

41 N-(4-Nitrophenylcarbonyl) N,N',S-tripropyl phosphorodiamidothioate

42 N-Hexylcarbonyl N,N'-dimethyl S-(2-methylpropyl) phosphorodiamidothioate

43 N-Cyclopropylcarbonyl N,N'-dimethyl S-(1-methylpentyl) phosphorodiamidothioate

44 N,N'-(1,2-Ethanediyl) N-formyl S-(1-methylpropyl) phosphorodiamidothioate

45 N,N'-(1,2-Ethanediyl) N-acetyl S-(1-methylethyl) phosphorodiamidothioate

46 N-Chloroacetyl N,N'-(1,2-propanediyl) S-propyl phosphorodiamidothioate

47 S-Ethyl N-methoxymethylcarbonyl N,N'-(1,3-propanediyl) phosphorodiamidothioate

48 N-Formyl N,N'-(1,3-propanediyl) S-propyl phosphorodiamidothioate

49 N-Formyl S-(1-methylpropyl) phosphorodiamidothioate

50 N-Formyl N-methyl S-(1-methylpropyl) phosphorodiamidothioate

51 N-Formyl N'-methyl S-propyl phosphorodiamidothioate

52 N-Acetyl N'-(2-propenyl) S-(1-methylpropyl) phosphorodiamidothioate

53 N-Formyl N',N'-di(2-propenyl) S-(1-methylpropyl) phosphorodiamidothioate

54 N-(12,12-Dichlorododecyl)carbonyl N-methyl N',N'-dimethyl S-hexyl phosphorodiamidothioate

55 N-(6-Bromohexyl)carbonyl N-dodecyl N',N'-diethyl S-(1-methylpropyl) phosphorodiamidothioate

56 N-(12-Cyanododecyl)carbonyl N,N'-dimethyl S-(1-methylpropyl) phosphorodiamidothioate

57 N-(6-Cyanohexyl)carbonyl N,N'-dimethyl S-(1-methylpropyl) phosphorodiamidothioate

58 N-Nitromethylthiocarbonyl N,N'-dimethyl S-(1-methylpropyl) phosphorodiamidothioate

59 N-(12-Nitrododecyl)carbonyl N,N'-dimethyl S-(1-methylpropyl) phosphorodiamidothioate

60 N-(6-Nitrohexyl)carbonyl N-dodecyl N'-(S-hexenyl) S-propyl phosphorodiamidothioate

61 N-(Hexyloxymethyl)carbonyl N,N'-dimethyl S-(1-methylpropyl) phosphorodiamidothioate

62 N-(6-Methoxyhexyl)carbonyl N,N'-dimethyl S-(1-methylpropyl) phosphorodiamidothioate

63 N-(Hexylthiomethyl)carbonyl N,N'-dimethyl S-(1-methylpropyl) phosphorodiamidothioate

64 N-(6-Methylthiohexyl)carbonyl N,N'-dimethyl S-(1-methylpropyl) phosphorodiamidothioate

65 N-(Hexylsulfinylmethyl)carbonyl N,N'-dimethyl S-(1-methylpropyl) phosphorodiamidothioate

66 N-(6-Methylsulfinylhexyl)carbonyl N,N'-dimethyl S-(1-methylpropyl) phosphorodiamidothioate

67 N-(Hexylsulfonylmethyl)carbonyl N,N'-dimethyl S-(1-methylpropyl) phosphorodiamidothioate

68 N-(6-Methylsulfonylhexyl)carbonyl N,N'-dimethyl S-(1-methylpropyl) phosphorodiamidothioate

69 N-(Hexanoylmethyl)thiocarbonyl N,N'-dimethyl S-(1-methylpropyl) phosphorodiamidothioate

70 N-(6-Acetylhexyl)carbonyl N,N'-dimethyl S-(1-methylpropyl) phosphorodiamidothioate

71 N-(Hexyloxycarbonylmethyl)carbonyl N,N'-dimethyl S-(1-methylpropyl) phosphorodiamidothioate

72 N-(6-Methoxycarbonylhexyl)carbonyl N,N'-dimethyl S-(1-methylpropyl) phosphorodiamidothioate

73 N-(Hexanoyloxymethyl)carbonyl N,N'-dimethyl S-(1-methylpropyl) phosphorodiamidothioate

74 N-(6-Acetoxyhexyl)thiocarbonyl N,N'-dimethyl S-(1-methylpropyl) phosphorodiamidothioate

75 N-(6-Methylaminohexyl)carbonyl N,N'-dimethyl S-(1-methylpropyl) phosphorodiamidothioate

76 N-(6-Diethylaminohexyl)carbonyl N,N'-dimethyl S-(1-methylpropyl) phosphorodiamidothioate

77 N-(Hexylaminomethyl)thiocarbonyl N,N'-dimethyl S-(1-methylpropyl) phosphorodiamidothioate

78 N-(Dihexylaminomethyl)carbonyl N,N'-dimethyl S-(1-methylpropyl) phosphorodiamidothioate

79 N-(6-Phenoxyhexyl)carbonyl N,N'-dimethyl S-(1-methylpropyl) phosphorodiamidothioate

80 N-(Phenylthiomethyl)carbonyl N,N'-dimethyl S-(1-methylpropyl) phosphorodiamidothioate

81 N-(6-Phenylthiohexyl)carbonyl N,N'-dimethyl S-(1-methylpropyl) phosphorodiamidothioate

82 N-(Phenylsulfinylmethyl)carbonyl N,N'-dimethyl S-(1-methylpropyl) phosphorodiamidothioate

83 N-(6-Phenylsulfinylhexyl)carbonyl N,N'-dimethyl S-(1-methylpropyl) phosphorodiamidothioate

84 N-(Phenylsulfonylmethyl)carbonyl N,N'-dimethyl S-(1-methylpropyl) phosphorodiamidothioate

85 N-(6-Phenylsulfonylhexyl)carbonyl N,N'-dimethyl S-(1-methylpropyl) phosphorodiamidothioate

86 N-(Phenoxycarbonylmethyl)carbonyl N,N'-dimethyl S-(1-methylpropyl) phosphorodiamidothioate

87 N-(6-Phenoxycarbonylhexyl)carbonyl N,N'-dimethyl S-(1-methylpropyl) phosphorodiamidothioate

88 N-(Phenoxycarbonyloxymethyl)thiocarbonyl N,N'-dimethyl S-(1-methylpropyl) phosphorodiamidothioate

89 N-(6-Phenoxycarbonyloxyhexyl)carbonyl N,N'-dimethyl S-(1-methylpropyl) phosphorodiamidothioate

90 N-(Phenylaminocarbonylmethyl)carbonyl N,N'-dimethyl S-(1-methylpropyl) phosphorodiamidothioate

91 N-(6-Phenylaminocarbonylhexyl)carbonyl N,N'-dimethyl S-(1-methylpropyl) phosphorodiamidothioate

92 N-[(1-Propenyl)oxycarbonylmethyl] carbonyl N,N'-dimethyl S-(1-methylpropyl) phosphorodiamidothioate

93 N-[6-(1-Propenyl)oxycarbonylhexyl] carbonyl N,N'-dimethyl S-(1-methylpropyl) phosphorodiamidothioate

94 N-[(1-Propenyl)carbonyloxymethyl] thiocarbonyl N,N'-dimethyl S-(1-methylpropyl) phosphorodiamidothioate

95 N-[6-(1-Propenyl)carbonyloxyhexyl] carbonyl N,N'-dimethyl S-(1-methylpropyl) phosphorodiamidothioate

96 N-(Aminocarbonylmethyl)carbonyl N,N'-dimethyl S-(1-methylpropyl) phosphorodiamidothioate

97 N-(6-Aminocarbonylhexyl)carbonyl N,N'-dimethyl S-(1-methylpropyl) phosphorodiamidothioate

98 N-(Acetamidomethyl)thiocarbonyl N,N'-dimethyl S-(1-methylpropyl) phosphorodiamidothioate

99 N-(6-Acetamidohexyl)carbonyl N,N'-dimethyl S-(1-methylpropyl) phosphorodiamidothioate

100 N-(Hexanoylaminomethyl)carbonyl N,N'-dimethyl S-(1-methylpropyl) phosphorodiamidothioate

101 N-(6-Hexanoylaminohexyl)carbonyl N,N'-dimethyl S-(1-methylpropyl) phosphorodiamidothioate

102 N-(Hexyloxycarbonyl)carbonyl N,N'-dimethyl S-(1-methylpropyl) phosphorodiamidothioate

103 N-(1,3-Butadienyl)carbonyl N,N'-dimethyl S-(1-methylpropyl) phosphorodiamidothioate

104 N-(2-Propynyl)carbonyl N,N'-dimethyl S-(1-methylpropyl) phosphorodiamidothioate

105 N-(2-Hexynyl)carbonyl N,N'-dimethyl S-(1-methylpropyl) phosphorodiamidothioate

106 N-Vinylcarbonyl N,N'-dimethyl S-(1-methylpropyl) phosphorodiamidothioate

107 N-(1-Dodecenyl)carbonyl N,N'-dimethyl S-(1-methylpropyl) phosphorodiamidothioate

108 N-(1-Hexenyl)carbonyl N,N'-dimethyl S-(1-methylpropyl) phosphorodiamidothioate

109 N-(5-Phenylpentyl)thiocarbonyl N,N'-dimethyl S-(1-methylpropyl) phosphorodiamidothioate

110 N-(2-Methyl-4-cyanophenyl)carbonyl N-dodecyl N',N'-dimethyl S-propyl phosphorodiamidothioate

111 N-(2-Inomo-4-hexylphenyl)carbonyl N,N'-dimethyl S-(1-methylpropyl) phosphorodiamidothioate

112 N-(2-Chloro-4-methoxyphenyl)carbonyl N,N'-dimethyl S-(1-methylpropyl) phosphorodiamidothioate

113 N-(4-Hexyloxyphenyl)thiocarbonyl N,N'-dimethyl S-(1-methylpropyl) phosphorodiamidothioate

114 N-(3-Methylthiophenyl)carbonyl N,N'-dimethyl S-(1-methylpropyl) phosphorodiamidothioate

115 N-(4-Hexylthiophenyl)carbonyl N,N'-dimethyl S-(1-methylpropyl) phosphorodiamidothioate

116 N-(2-Perchlorobutyl-4-butylsulfinylphenyl)carbonyl N,N'-dimethyl S-(1-methylpropyl) phosphorodiamidothioate

117 N-(4-Hexylsulfonylphenyl)carbonyl N,N'-dimethyl S-(1-methylpropyl) phosphorodiamidothioate

118 N-(3-Phenoxyphenyl)carbonyl N,N'-dimethyl S-(1-methylpropyl) phosphorodiamidothioate

119 N-(3-Trifluormethyl-4-acetylphenyl)carbonyl N,N'-dimethyl S-(1-methylpropyl) phosphorodiamidothioate

120 N-(4-Dimethylaminocarbonylphenyl)thiocarbonyl N,N'-dimethyl S-(1-methylpropyl) phosphorodiamidothioate

121 N-(3-Hexylaminocarbonylphenyl)carbonyl N,N'-dimethyl S-(1-methylpropyl) phosphorodiamidothioate

122 N-(4-Hexyloxycarbonylphenyl)carbonyl N,N'-dimethyl S-(1-methylpropyl) phosphorodiamidothioate

123 N-(3-Hexanoylphenyl)carbonyl N,N'-dimethyl S-(1-methylpropyl) phosphorodiamidothioate

124 N-(4-Acetoxyphenyl)carbonyl N,N'-dimethyl S-(1-methylpropyl) phosphorodiamidothioate

125 N-(3-Hexanoyloxyphenyl)carbonyl N,N'-dimethyl S-(1-methylpropyl) phosphorodiamidothioate

126 N-(4-Phenylthiophenyl)carbonyl N,N'-dimethyl S-(1-methylpropyl) phosphorodiamidothioate

127 N-(4-Phenylsulfinylphenyl)carbonyl N,N'-dimethyl S-(1-methylpropyl) phosphorodiamidothioate

128 N-(3-Phenylsulfonylphenyl)carbonyl N,N'-dimethyl S-(1-methylpropyl) phosphorodiamidothioate

129 N-(4-Benzylphenyl)thiocarbonyl N,N'-dimethyl S-(1-methylpropyl) phosphorodiamidothioate

130 N-(3-Phenylcarbonylphenyl)carbonyl N,N'-dimethyl S-(1-methylpropyl) phosphorodiamidothioate

131 N-(4-Phenoxycarbonylphenyl)thiocarbonyl N,N'-dimethyl S-(1-methylpropyl) phosphorodiamidothioate

132 N-(3-Phenylcarbonyloxyphenyl)carbonyl N,N'-dimethyl S-(1-methylpropyl) phosphorodiamidothioate

133 N-(3-Phenylaminocarbonylphenyl)carbonyl N,N'-dimethyl S-(1-methylpropyl) phosphorodiamidothioate

134 N-[3-(1-Propenyl)oxycarbonylphenyl]carbonyl N,N'-dimethyl S-(1-methylpropyl) phosphorodiamidothioate

135 N-[3-(1-Hexenyl)oxycarbonylphenyl]carbonyl N,N'-dimethyl S-(1-methylpropyl) phosphorodiamidothioate

136 N-[4-(1-Propenyl)carbonyloxyphenyl]carbonyl N,N'-dimethyl S-(1-methylpropyl) phosphorodiamidothioate

137 N-[4-(1-Hexenyl)carbonyloxyphenyl]carbonyl N,N'-dimethyl S-(1-methylpropyl) phosphorodiamidothioate

138 N-(3-Aminocarbonylphenyl)carbonyl N,N'-dimethyl S-(1-methylpropyl) phosphorodiamidothioate

139 N-(4-Acetylaminophenyl)thiocarbonyl N,N'-dimethyl S-(1-methylpropyl) phosphorodiamidothioate

140 N-(4-Hexanoylaminophenyl)carbonyl N,N'-dimethyl S-(1-methylpropyl) phosphorodiamidothioate

141 - 242

Compounds 110-140 listed above but each modified in that, in the $R^1-\overset{X}{\overset{\|}{C}}-$ moiety of Formula I, there is interposed (a) a $-CH_2-$ group and (b) a $-(CH_2)_5$ group between the substituted phenyl/(thio)carbonyl linkage, e.g. Compound 110 modified to become the two compounds: N-(2-Methyl-4-cyanophenyl)methylcarbonyl N-dodecyl N',N'-dimethyl S-propyl phosphorodiamidothioate (Compound 141) and N-[5-(2-Methyl-4-cyanophenyl)pentyl]carbonyl N-dodecyl N',N'-dimethyl S-propyl phosphorodiamidothioate (Compound 142).

243 N-Dodecyl N-formyl N'-methyl S-(1-methylpropyl) phosphorodiamidothioate

244 N-Hexyl N-formyl N'-methyl S-(1-methylpropyl) phosphorodiamidothioate

245 N-12-Cyanododecyl N-formyl N'-methyl S-(1-methylpropyl) phosphorodiamidothioate

246 N-6-Cyanohexyl N-formyl N'-methyl S-(1-methylpropyl) phosphorodiamidothioate

247 N-Nitromethyl N-formyl N'-methyl S-(1-methylpropyl) phosphorodiamidothioate

248 N-12-Nitrododecyl N-formyl N'-methyl S-(1-methylpropyl) phosphorodiamidothioate

249 N-6-Nitrohexyl N-formyl N'-methyl S-(1-methylpropyl) phosphorodiamidothioate

250 N-Hexyloxymethyl N-formyl N'-methyl S-(1-methylpropyl) phosphorodiamidothioate

251 N-6-Methoxyhexyl N-formyl N'-methyl S-(1-methylpropyl) phosphorodiamidothioate

252 N-Hexylthiomethyl N-formyl N'-methyl S-(1-methylpropyl) phosphorodiamidothioate

253 N-6-Methylthiohexyl N-formyl N'-methyl S-(1-methylpropyl) phosphorodiamidothioate

254 N-Hexylsulfinylmethyl N-formyl N'-methyl S-(1-methylpropyl) phosphorodiamidothioate

255 N-6-Methylsulfinylhexyl N-formyl N'-methyl S-(1-methylpropyl) phosphorodiamidothioate

256 N-Hexylsulfonylmethyl N-formyl N'-methyl S-(1-methylpropyl) phosphorodiamidothioate

257 N-6-Methylsulfonylhexyl N-formyl N'-methyl S-(1-methylpropyl) phosphorodiamidothioate

258 N-Hexanoylmethyl N-formyl N'-methyl S-(1-methylpropyl) phosphorodiamidothioate

259 N-6-Acetylhexyl N-formyl N'-methyl S-(1-methylpropyl) phosphorodiamidothioate

260 N-Hexyloxycarbonylmethyl N-formyl N'-methyl S-(1-methylpropyl) phosphorodiamidothioate

261 N-6-Methoxycarbonylhexy N-formyl N'-methyl S-(1-methylpropyl) phosphorodiamidothioate

262 N-Hexanoyloxymethyl N-formyl N'-methyl S-(1-methylpropyl) phosphorodiamidothioate

263 N-6-Acetoxyhexyl N-formyl N'-methyl S-(1-methylpropyl) phosphorodiamidothioate

264 N-6-Methylaminohexyl N-formyl N'-methyl S-(1-methylpropyl) phosphorodiamidothioate

265 N-6-Diethylaminohexyl N-formyl N'-methyl S-(1-methylpropyl) phosphorodiamidothioate

266 N-Hexylaminomethyl N-formyl N'-methyl S-(1-methylpropyl) phosphorodiamidothioate

267 N-Dihexylaminomethyl N-formyl N'-methyl S-(1-methylpropyl) phosphorodiamidothioate

268 N-6-Phenoxyhexyl N-formyl N'-methyl S-(1-methylpropyl) phosphorodiamidothioate

269 N-Phenylthiomethyl N-formyl N'-methyl S-(1-methylpropyl) phosphorodiamidothioate

270 N-6-Phenylthiohexyl N-formyl N'-methyl S-(1-methylpropyl) phosphorodiamidothioate

271 N-Phenylsulfinylmethyl N-formyl N'-methyl S-(1-methylpropyl) phosphorodiamidothioate

272 N-6-Phenylsulfinylhexyl N-formyl N'-methyl S-(1-methylpropyl) phosphorodiamidothioate

273 N-Phenylsulfonylmethyl N-formyl N'-methyl S-(1-methylpropyl) phosphorodiamidothioate

274 N-6-Phenylsulfonylhexyl N-formyl N'-methyl S-(1-methylpropyl) phosphorodiamidothioate

275 N-Phenoxycarbonylmethyl N-formyl N'-methyl S-(1-methylpropyl) phosphorodiamidothioate

276 N-6-Phenoxycarbonylhexyl N-formyl N'-methyl S-(1-methylpropyl) phosphorodiamidothioate

277 N-Phenoxycarbonyloxymethyl N-formyl N'-methyl S-(1-methylpropyl) phosphorodiamidothioate

278 N-6-Phenoxycarbonyloxyhexyl N-formyl N'-methyl S-(1-methylpropyl) phosphorodiamidothioate

279 N-Phenylaminocarbonylmethyl N-formyl N'-methyl S-(1-methylpropyl) phosphorodiamidothioate

280 N-6-Phenylaminocarbonylhexyl N-formyl N'-methyl S-(1-methylpropyl) phosphorodiamidothioate

281 N-(1-Propenyl)oxycarbonylmethyl N-formyl N'-methyl S-(1-methylpropyl) phosphorodiamidothioate

282 N-6-(1-Propenyl)oxycarbonylhexyl N-formyl N'-methyl S-(1-methylpropyl) phosphorodiamidothioate

283 N-(1-Propenyl)carbonyloxymethyl N-formyl N'-methyl S-(1-methylpropyl) phosphorodiamidothioate

284 N-6-(1-Propenyl)carbonyloxyhexyl N-formyl N'-methyl S-(1-methylpropyl) phosphorodiamidothioate

285 N-Aminocarbonylmethyl N-formyl N'-methyl S-(1-methylpropyl) phosphorodiamidothioate

286 N-6-Aminocarbonylhexyl N-formyl N'-methyl S-(1-methylpropyl) phosphorodiamidothioate

287 N-Acetamidomethyl N-formyl N'-methyl S-(1-methylpropyl) phosphorodiamidothioate

288 N-6-Acetamidohexyl N-formyl N'-methyl S-(1-methylpropyl) phosphorodiamidothioate

289 N-Hexanoylaminomethyl N-formyl N'-methyl S-(1-methylpropyl) phosphorodiamidothioate

290 N-6-Hexanoylaminohexyl N-formyl N'-methyl S-(1-methylpropyl) phosphorodiamidothioate

291 N-Hexyloxycarbonyl N-formyl N'-methyl S-(1-methylpropyl) phosphorodiamidothioate

292 N-1,3-Butadienyl N-formyl N'-methyl S-(1-methylpropyl) phosphorodiamidothioate

293 N-2-Propynyl N-formyl N'-methyl S-(1-methylpropyl) phosphorodiamidothioate

294 N-2-Hexynyl N-formyl N'-methyl S-(1-methylpropyl) phosphorodiamidothioate

295 N-Vinylcarbonyl N-formyl N'-methyl S-(1-methylpropyl) phosphorodiamidothioate

296 N-1-Dodecenyl N-formyl N'-methyl S-(1-methylpropyl) phosphorodiamidothioate

297 N-1-Hexenyl N-formyl N'-methyl S-(1-methylpropyl) phosphorodiamidothioate

298 N-5-Phenylpentyl N-formyl N'-methyl S-(1-methylpropyl) phosphorodiamidothioate

299 N-2-Methyl-4-cyanophenyl N-formyl N',N'-dimethyl S-propol phosphorodiamidothioate

300 N-2-Bromo-4-hexylphenyl N-formyl N'-methyl S-(1-methylpropyl) phosphorodiamidothioate

301 N-2-Chloro-4-methoxyphenyl N-formyl N'-methyl S-(1-methylpropyl) phosphorodiamidothioate

302 N-4-Hexyloxyphenyl N-formyl N'-methyl S-(1-methylpropyl) phosphorodiamidothioate

303 N-3-Methylthiophenyl N-formyl N'-methyl S-(1-methylpropyl) phosphorodiamidothioate

304 N-4-Hexylthiophenyl N-formyl N'-methyl S-(1-methylpropyl) phosphorodiamidothioate

305 N-2-Perchlorobutyl-4-butylsulfinylphenyl N-formyl N'-methyl S-(1-methylpropyl) phosphorodiamidothioate

306 N-4-Hexylsulfonylphenyl N-formyl N'-methyl S-(1-methylpropyl) phosphorodiamidothioate

307 N-3-Phenoxyphenyl N-formyl N'-methyl S-(1-methylpropyl) phosphorodiamidothioate

308 N-3-Trifluormethyl-4-acetylphenyl N-formyl N'-methyl S-(1-methylpropyl) phosphorodiamidothioate

309 N-4-Dimethylaminocarbonylphenyl N-formyl N'-methyl S-(1-methylpropyl) phosphorodiamidothioate

310 N-3-Hexylaminocarbonylphenyl N-formyl N'-methyl S-(1-methylpropyl) phosphorodiamidothioate

311 N-4-Hexyloxycarbonylphenyl N-formyl N'-methyl S-(1-methylpropyl) phosphorodiamidothioate

312 N-3-Hexanoylphenyl N-formyl N'-methyl S-(1-methylpropyl) phosphorodiamidothioate

313 N-4-Acetoxyphenyl N-formyl N'-methyl S-(1-methylpropyl) phosphorodiamidothioate

314 N-3-Hexanoyloxyphenyl N-formyl N'-methyl S-(1-methylpropyl) phosphorodiamidothioate

315 N-4-Phenylthiophenyl N-formyl N'-methyl S-(1-methylpropyl) phosphorodiamidothioate

316 N-4-Phenylsulfinylphenyl N-formyl N'-methyl S-(1-methylpropyl) phosphorodiamidothioate

317 N-3-Phenylsulfonylphenyl N-formyl N'-methyl S-(1-methylpropyl) phosphorodiamidothioate

318 N-4-Benzylphenyl N-formyl N'-methyl S-(1-methylpropyl) phosphorodiamidothioate

319 N-3-Phenylcarbonylphenyl N-formyl N'-methyl S-(1-methylpropyl) phosphorodiamidothioate

320 N-4-Phenoxycarbonylphenyl N-formyl N'-methyl S-(1-methylpropyl) phosphorodiamidothioate

321 N-3-Phenylcarbonyloxyphenyl N-formyl N'-methyl S-(1-methylpropyl) phosphorodiamidothioate

322 N-3-Phenylaminocarbonylphenyl N-formyl N'-methyl S-(1-methylpropyl) phosphorodiamidothioate

323 N-3-(1-Propenyl)oxycarbonylphenyl N-formyl N'-methyl S-(1-methylpropyl) phosphorodiamidothioate

324 N-3-(1-Hexenyl)oxycarbonylphenyl N-formyl N'-methyl S-(1-methylpropyl) phosphorodiamidothioate

325 N-4-(1-Propenyl)carbonyloxyphenyl N-formyl N'-methyl S-(1-methylpropyl) phosphorodiamidothioate

326 N-4-(1-Hexenyl)carbonyloxyphenyl N-formyl N'-methyl S-(1-methylpropyl) phosphorodiamidothioate

327 N-3-Aminocarbonylphenyl N-formyl N'-methyl S-(1-methylpropyl) phosphorodiamidothioate

328 N-4-Acetylaminophenyl N-formyl N'-methyl S-(1-methylpropyl) phosphorodiamidothioate

329 N-4-Hexanoylaminophenyl N-formyl N'-methyl S-(1-methylpropyl) phosphorodiamidothioate

330 - 431

Compounds 299-329 listed above but each modified in that, in the $R^5$ moiety of Formul I, there is interposed, between the substituted phenyl/N atom linkage, (a) a $-CH_2-$ group and (b) a $-(CH_2)_5$ group, e.g. Compound 299 modified to become the two compounds: N-(2-Methyl-4-cyanophenyl)methyl N-dodecyl N',N'-dimethyl S-propyl phosphorodiamidothioate (Compound 330) and N-5-(2-Methyl-4-cyanophenyl)-pentyl N-dodecyl N',N'-dimethyl S-propyl phosphorodiamidothioate (Compound 331).

The compounds of the present invention can be prepared by a variety of methods.

One method involves acylation of an S-alkyl phosphorodiamido(di)thioate of Formula IV. For example:

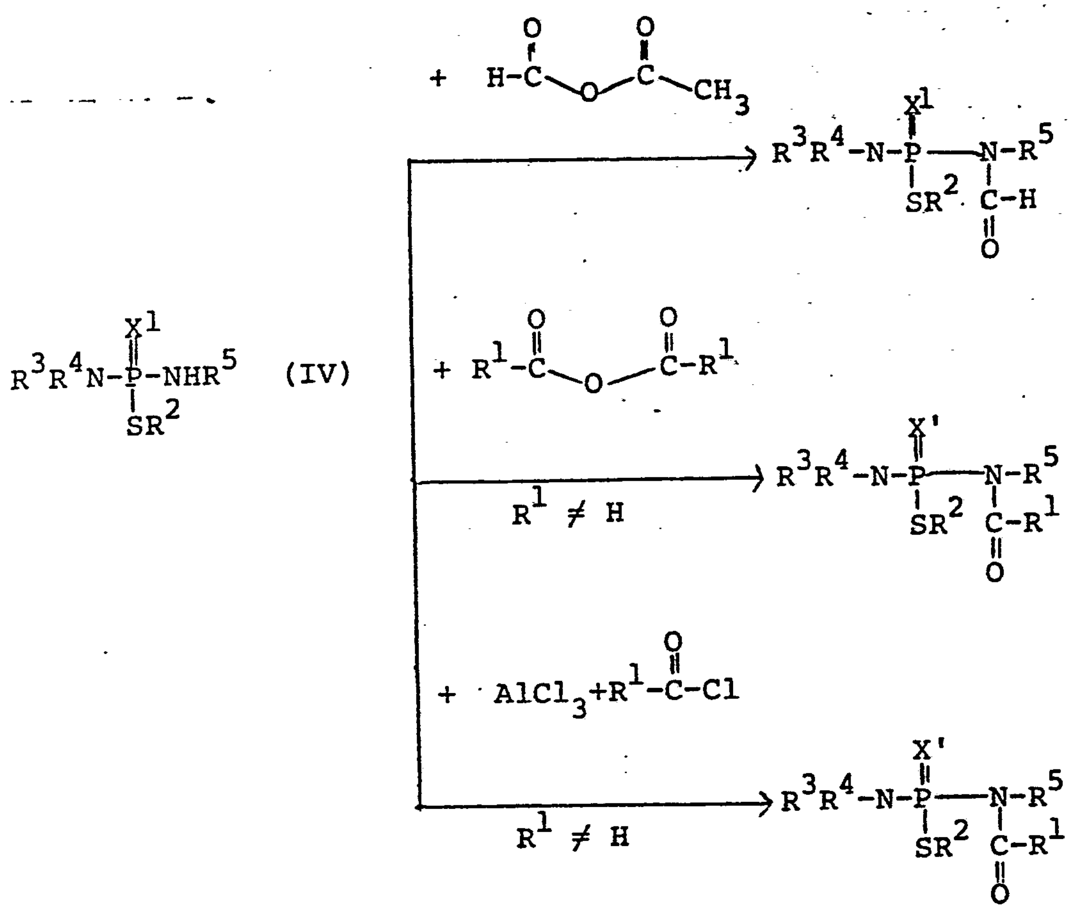


(IV)

wherein $R^1$, $R^2$, $R^3$, $R^4$ and $R^5$ and $X^1$ are as defined for Formula I except that $R^1$ in the above reaction schemes is not hydrogen.

Another method involves the hydrolysis of a formamidine. The general reaction can be represented by the following equation:

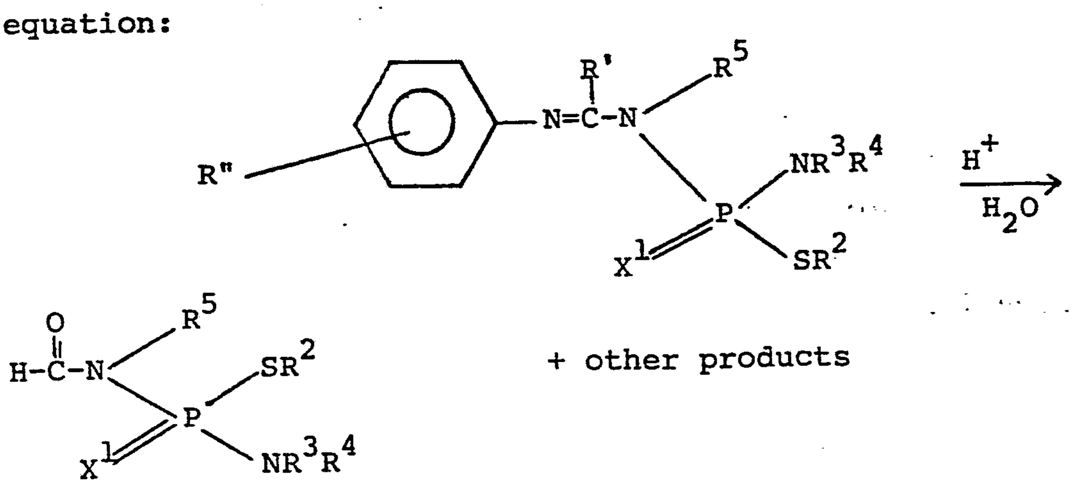


+ other products

In the above reaction scheme, $R^2$, $R^3$, $R^4$ fined for Formula I, R' is hydrogen or alkyl (preferably $C_1$-$C_{12}$ and more preferably $C_1$-$C_6$) and R" is hydrogen or one

or more ring substituents.

Yet another method of preparation, when $R^1 \neq$ hydrogen, involves the reaction of acyl halides with substituted or unsubstituted pyridines and the appropriate phosphorodiamidothioate. The reaction proceeds via the formation of an N-acylpyridinium salt. The general process herein called the "pyridine" process can be represented by the following reaction scheme:

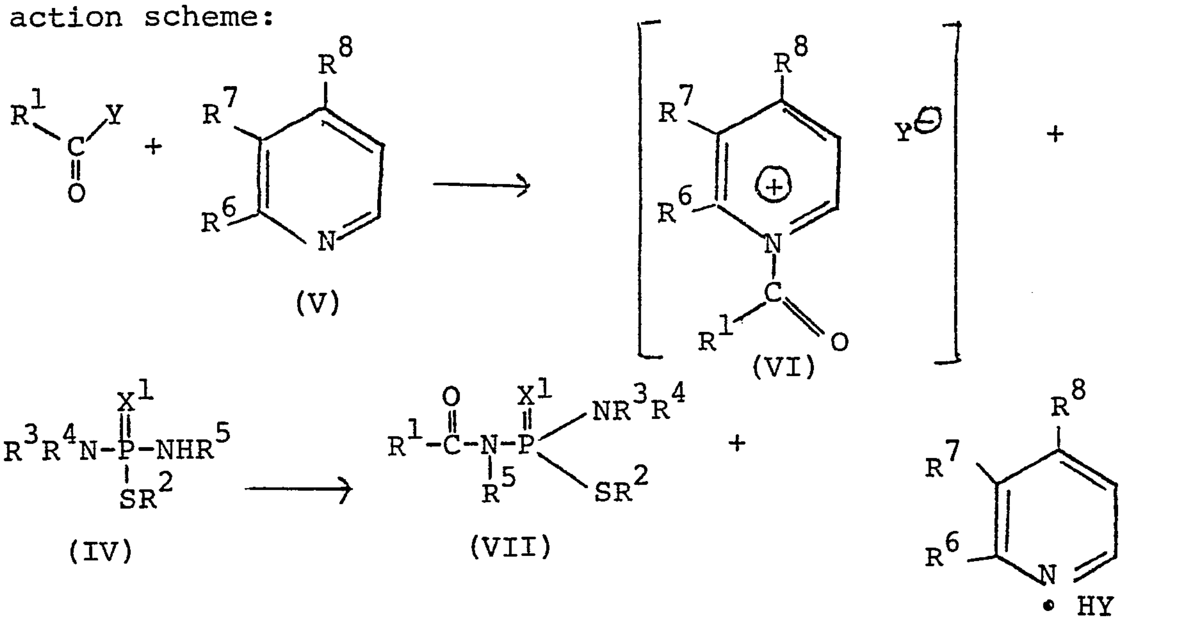

(V) (VI) (IV) (VII)

wherein $R^1$, $R^2$, $R^3$, $R^4$, $R^5$ and $X^1$ are as defined for Formula I except that $R^1$ is not hydrogen and

$R^6$ and $R^7$ (when not joined together) are hydrogen;

$R^6$ and $R^7$ (when joined together) form the "B" ring of quinoline;

$R^8$ (when not joined to $R^7$) is hydrogen, amino, mono- or di($C_1$-$C_6$alkyl)amino or a nitrogen-containing ($C_2$-$C_6$)heterocyclic ring bonded at nitrogen to the pyridine ring, such a heterocyclic ring preferably containing 4 or 5 carbon atoms, one nitrogen atom and optionally one heterocyclic oxygen atom;

$R^7$ and $R^8$ (when joined together) form the"B"ring of isoquinoline; and

Y is chlorine or bromine.

By the "B" ring referred to above is meant the benzene ring of the fused benzene and pyridine ring system of quinoline or isoquinoline.

The compounds of Formula VII have not been found to be formed in the presence of amine bases other than the pyridines and substituted pyridines of Formula V. The Formula V compounds can be used in the presence of acid scavengers and can be used stoichiometrically or in excess.

The pyridine process is carried out by contacting a pyridine of Formula V with (i) the acyl halide and (ii) a compound of Formula IV whereby there is formed the desired compound of Formula VII. The contacting of the pyridine, acyl halide and phosphorus compound is preferably carried out at a temperature from about -20°C to about 100°C and preferably in the presence of an inert solvent. The N-acylphosphoramide product is then recovered.

Typical examples of acyl halides used in the pyridine process are:

acetyl chloride
trichloroacetyl chloride
methoxyacetyl chloride
octadecanoyl chloride
3-butynoyl chloride
acryloyl chloride
cyclopropylcarboxoyl chloride
cyclohexylcarboxoyl chloride
benzoyl chloride
4-chlorobenzoyl chloride
4-nitrobenzoyl chloride
4-toluoyl chloride
phenylacetyl chloride, and
5-phenylpentanoyl chloride

Typical pyridines of Formula V that can be utilized in the process include:

quinoline
isoquinoline
pyridine
4-dimethylaminopyridine
4-pyrrolidinopyridine
4-morpholinopyridine and
4-piperidinopyridine

Preferably pyridine, 4-dimethylaminopyridine or 4-pyrrolidinopyridine, and more preferably pyridine, is employed.

The pyridine process is preferably carried out in the presence of an inert solvent, preferably an aromatic hydrocarbon such as toluene. Ether solvents and aliphatic hydrocarbons can also be used.

Typical solvents that can be utilized in the pyridine process include:

Aromatic Hydrocarbons
- toluene
- xylene
- benzene
- chlorobenzene
- bromobenzene
- nitrobenzene
- butylbenzene
- diethylbenzene
- dichlorobenzene
- anisole

Ethers
- ethyl
- tetrahydrofuran
- dioxane
- isoamyl
- dimethoxyethane

Aliphatic Hydrocarbons
- pentane
- hexane

cyclohexane
isoctane

Temperatures utilized for the pyridine process range from about -20$^{o}$ to about 100$^{o}$C preferably from about 0$^{o}$C to about 30$^{o}$C, more preferably from about 10$^{o}$C to about 25$^{o}$C.

The pyridine process is usually carried out at atmospheric pressure.

The molar ratios of the pyridine:acyl halide:diamidate may range from about 0.5:0.5:1 to about 4:4:1, preferably about 2:2:1.

The general mode of addition is to add the diamidate and pyridine to a solution of acyl chloride in solvent.

The preferred mode of proceeding is to add 1 equivalent of diamidate and 2 equivalents of the pyridine in toluene to 2 equivalents of acyl chloride in toluene.

Up to a 4-fold excess of any of the reagents can be used but a 2-fold excess of pyridine and acyl chloride is preferred in most cases.

The methods given above for the preparation of compounds of Formula I are not, of course, exhaustive and in general there may be used any method described in the literature and which concerns the preparation of analogous compounds.

The S-alkyl phosphorodiamidothioate intermediates of Formula IV can be prepared in one or two steps by the reaction of an S-alkyl phosphorodichloridothioate with monoalkyl amines.

When the two amine groups are different, the S-alkyl phosphorodichloridothioate is reacted with one of the amine groups to form a monochloride intermediate. The second

amine group is then added. For example:

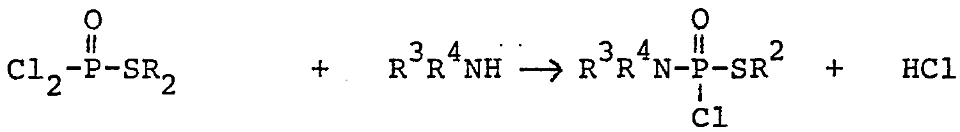

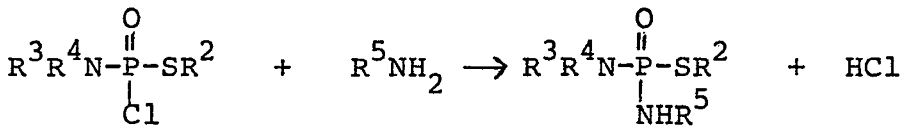

When $R^3$ and $R^5$ are the same $(C_1-C_3)$ monoalkyl group, the intermediates are formed by adding two moles of amine to the S-alkyl phosphorodichloridothiate.

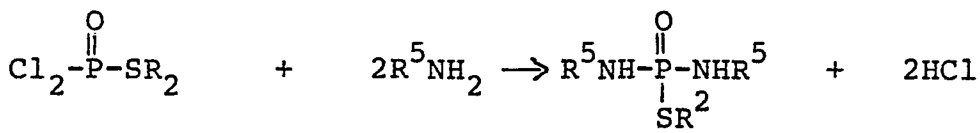

The above reactions are preferably carried out in the presence of an acid binding reagent, such as a dialkylaniline, pyridine or trialkyl amine. Two additional moles of $R^5NH_2$ may serve as the acid binding agent when $R^5NH_2$ is the reactant.

For preparation of both intermediates and acyl phosphorodiamido(di)thioates, generally a substantially equimolar ratio of reactants is preferred. While not required, the reaction is advantageously carried out in the presence of an inert organic solvent such as an ether, aromatic hydrocarbon, halogenated aromatic hydrocarbon, aliphatic hydrocarbon, aliphatic nitrile, nitroalkyl or nitroaryl and the like, or mixtures thereof. Suitable solvents include, for example, ethyl ether, dioxane, methylene chloride, tetrahydrofuran, benzene, toluene, chlorobenzene, heptane, acetonitrile, nitromethane, nitrobenzene and the like. The reaction is generally conducted in a temperature range of about -20°C or -10°C to 100°C or more, and preferably in the range of about 0° to about 60°C.

All of the initial starting materials used in the preparation of the compounds of this invention are either known compounds, are readily prepared by adaptation of known routes or are herein described. For example, the formamidine starting materials are prepared by condensation of an aniline with an N-alkyl formamide (U.S. Patent No. 3,502,720).

The following examples are given by way of illustration of the preparation of compounds of Formula I. Temparatures given are in degrees Celsius.

Example 1) - N-Formyl N,N'-dimethyl S-(1-methylpropyl) phosphorodiamidothioate

Formic acid, 10ml, and acetic anhydride, 20ml, were mixed at room temperature and heated at 50° for 15 minutes, then recooled in ice. A solution of N,*N*'-dimethyl *S*-(1-methylpropyl) phosphorodiamidothioate, 39,2g (0.2 mole), and 0.5 ml of 85% phosphoric acid in 30 ml of methylene chloride were added. The solution was warmed to room temperature and stirred for 6 days at room temperature. One half of the mixture was diluted in 100 ml of $CH_2Cl_2$ and extracted with three 100 ml portions of water. The methylene chloride was dried over 4Å molecular sieves, filtered, and evaporated to give 12 g (50% yield) of product as an oil.

The compounds of following Examples 2-12 were prepared in a manner analogous to that of Example 1.

Example 2) - N-Formyl N,N',N'-trimethyl S-(1-methylpropyl) phosphorodiamidothioate

Example 3) - N-Formyl N,N'-dimethyl S-(2-methylpropyl) phosphorodiamidothioate

Example 4) - N-Formyl N,N'-dimethyl S-propyl phosphorodiamidothioate

Example 5) - N-Formyl N,N'-di(2-propenyl) S-(1-methylpropyl) phosphorodiamidothioate

Example 6) - N,N'-Diethyl N-formyl S-(1-methylpropyl) phosphorodiamidothioate

Example 7) - N,N'-Diethyl N-formyl S-propyl phoshorodiamidothioate

Example 8) - N-Formyl N,N',N-trimethyl S-propyl phosphorodiamidothioate

Example 9) - N-Formyl N,N'-dimethyl S-(1-methylethyl) phosphorodiamidothioate

Example 10) - N-Formyl N,N'-dimethyl S-(3-methylbutyl) phosphorodiamidothioate

Example 11) - S-Ethyl N-formyl N,N'-dimethyl phosphorodiamidothioate

Example 12) - <u>N-Ethyl N-formyl N'-methyl S-(1-methylpropyl) phosphorodiamidothioate</u>

N-Ethyl N'-methyl N-{(4-methylphenylimino)methyl} S-(1-methylpropyl) phosphorodiamidothioate was hydrolyzed (for a period of over two weeks) as 5% active ingredient on Celatom MP-78 granular (diatomaceous silica), which had a pH of 5 and contained 3% water. The organic compounds were extracted by stirring 200 g of the 5% Celatom granular in 1200 ml of toluene for 3 minutes. The solvent was filtered through Super-Cel (diatomaceous silica) and evaporated to give 6.7 g of oil. The product was isolated and purified by preparative liquid chromatography using PrePak-500 silica gel columns in series and a mobile phase of 90 ethyl acetate/10 isooctane (by volume) at a flow rate of 250 ml/min. Recovery of product was 2.9 g.

Example 13) - <u>N,N'-Dimethyl N-acetyl S-(1-methylpropyl) phosphorodiamidothioate</u>

(A) N,N'-Dimethyl S-(1-methylpropyl phosphorodiamidothioate, 7.1 g (0.036 mole), acetic anhydride, 7.44 g (0.073 mole), and 0.1 ml of 85% phosphoric acid were heated for 9 hours at reflux in 10 ml of methylene chloride. The mixture was extracted with two 50 ml portions of water, dried with 4Å molecular sieves, and evaporated to give 7 g of oil. The product was purified by column

chromatography on 20 g of Biosil A (silisic acid). Elution with toluene (3x100 ml portions) and 1/1 by volume ether/hexane (250 ml) gave 0.7 g (8% yield) of product as an oil.

(B) Aluminum chloride, 7.0 g (0.052 mole), was dissolved in 30 ml of nitromethane which had been dried over 4Å molecular sieves. The reaction rose exothermically to 35°, and was cooled to room temperature. Acetyl chloride, 3.8 ml (0.052 mole), was added and the reaction mixture was stirred for 10 minutes at room temperature. A solution of N,N'-dimethyl S-(1-methylpropyl) phosphorodiamidothioate, 5 g (0.026 mole), in 20 ml of nitromethane was added and stirring was continued for 8 hours at room temperature. After standing overnight, the reaction was diluted with 100 ml of ether, extracted with 50 of water, then 5% sodium bicarbonate solution. The ether layer was dried over 4Å molecular sieves, filtered, and evaporated to yield 2.6 g (40% of theory) of product as a yellow oil.

Example 14) - <u>N,N'-Dimethyl S-(1-methylpropyl) N-trifluoromethylcarbonyl phosphorodiamidothioate</u>

N,N'-Dimethyl S-(1-methylpropyl) phosphorodiamidothioate, 15 g (0.08 mole), trifluoroacetic anhydride, 25.2 g (0.12 mole), 0.2 ml of 85% $H_3PO_4$ and 20 ml of methylene chloride were heated for 7 hours at reflux. The reaction mixture was extracted with 100 ml of water, dried over 4Å molecular sieves, heated, and evaporated at give 19.2 g of oil. Purification of 10 g of material by preparative high pressure liquid chromatography using two PrePak 500 silica gel columns in series and a mobile phase of 70 ethyl acetate/30 isooctane (by volume) gave 2 g of product.

Example 15) - <u>N,N'-Dimethyl S-(1-methylpropyl) N-nonylcarbonyl phosphorodiamidothioate</u>

(A) A solution of N,N'-dimethyl S-(1-methylpropyl) phosphorodiamidothioate, 10.6 g (0.054 mole), and pyridine 4.3 g (0.054 mole), in 40 ml of toluene was added to an ice-cooled solution of decanoyl chloride, 10.3 g (0.054

mole), in 50 ml of toluene. A white solid formed after a few minutes. The suspension was stirred for 4 days at ambient temperature. It was extracted sequentially with 250 ml of 5% sodium bicarbonate and 2% hydrochloric acid. The organic layer was dried with 4Å molecular sieves and evaporated to give 15 g of yellow oil. Chromatography on 60 g of Biosil A (elution with 10% ether in toluene) gave 3 g (17%yield) of product.

(B) A solution of N,N'-dimethyl S-(1-methylpropyl) phosphorodiamidothioate, 5.3 g (0.026 mole), and 4-pyrrolidinopyridine, 3.80 g (0.026 mole), in 20 ml of toluene was added dropwise over 10 minutes to an ice-cooled solution of decanoyl chloride, 5.13 g (0.026 mole), in 25 ml of toluene, maintaining a temperature of 10-13°C, for 1/2 hour after completion of the addition. The reaction mixture was stirred for 24 hours, diluted with 100 ml of ether, filtered, and evaporated to give 8.4 g of crude product. The spectral data (nmr and ir) were similar to those obtained using the method of part A of this Example.

The following Examples 16-27 were prepared in a manner analogous to that described in Example 15, part A.

Example 16) - N,N'-Dimethyl S-(1-methylpropyl) N-(4-nitrophenylcarbonyl) phosphorodiamidothioate

Example 17) - N-{(2-Methoxycarbonyl)ethylcarbonyl} N,N'-dimethyl S-(1-methylpropyl) phosphorodiamidothioate

Example 18) - N-Methoxymethylcarbonyl N,N'-dimethyl S-(1-methylpropyl) phosphorodiamidothioate

Example 19) - N-Dichloromethylcarbonyl N,N'-dimethyl S-(1-methylpropyl) phosphorodiamidothioate

Example 20) - N{(1-Bromoethyl)carbonyl} N',N'-dimethyl S-(1-methylpropyl) phosphorodiamidothioate

Example 21) - N-{(1-Chloroethyl)carbonyl} N,N'-dimethyl S-(1-methylpropyl) phosphorodiamidothioate

Example 22) - N,N'-Dimethyl S-(1-methylpropyl) N-phenylcarbonyl phosphorodiamidothioate

Example 23) - N,N'-Dimethyl S-(1-methylpropyl) N- (2-phenethylcarbonyl) phosphorodiamidothioate

Example 24) - N-Chloromethylcarbonyl N,N'-dimethyl S-(1-methylpropyl) phosphorodiamidothioate

Example 25) - N-Bromomethylcarbonyl N,N'-dimethyl S-(1-methylpropyl) phosphorodiamidothioate

Example 26) - N-{(Ethoxycarbonylmethyl)carbonyl} N,N'-dimethyl S-(1-methylpropyl) phosphorodiamidothioate

Example 27) - N-Cyclopropylcarbonyl N,N'-dimethyl S-(1-methylpropyl) phosphorodiamidothioate

Example 28) - N-(Methoxycarbonyl)carbonyl N,N'-dimethyl S-(1-methylpropyl) phosphorodiamidothioate

A solution of N,N'-dimethyl S-(1-methylpropyl) phosphorodiamidothioate, 10 g (0.051 mole), and pyridine, 8.1 g (0.102 moles), in 50 ml of toluene was added dropwise to an ice-cooled solution of methoxalyl chloride, 12.5 g (0.102 moles), in 50 ml of toluene. The mixture was stirred for 48 hours at room temperature, filtered to remove the pyridine hydrochloride, and evaporated. The residual oil was diluted with 200 ml of ether, precipitating additional pyridine hydrochloride, filtered, and evaporated to give 11 g of oil. Purification by preparative high pressure liquid chromatography using one PrePak 500 silica gel column and a mobile phase of ethyl acetate gave 2.0 g (14% of theory) of product.

The compounds of the following Examples 29-37 were prepared in a manner analogous to that described in Example 28.

Example 29) - N-(3-Chloropropyl)carbonyl N,N'-dimethyl S-(1-methylpropyl) phosphorodiamidothioate

Example 30) - N-(8,11-Heptadecadienyl)carbonyl N,N'-dimethyl S-(1-methylpropyl) phosphorodiamidothioate

Example 31) - N,N'-Dimethyl N-(1-propenecarbonyl) S-(1-methylpropyl) phosphorodiamidothioate

Example 32) - N,N'-Dimethyl N-(phenylmethyl)carbonyl S-(1-methylpropyl) phosphorodiamidothioate

Example 33) - N-(4-Chlorophenyl)carbonyl N,N'-dimethyl S-(1-methylpropyl) phosphorodiamidothioate

Example 34) - N-(2,4-Dichlorophenyl)carbonyl N,N'-dimethyl S-(1-methylpropyl) phosphorodiamidothioate

Example 35) - N-Cyclohexylcarbonyl N,N'-dimethyl S-(1-methylpropyl) phosphorodiamidothioate

Example 36) - N,N'-Dimethyl S-(1-methylpropyl) N-(phenoxymethyl)carbonyl phosphorodiamidothioate

Example 37) - N-(2-Bromoethylcarbonyl) N,N'-dimethyl S-(1-methylpropyl) phosphorodiamidothioate

Example 38) - N-Thioformyl N,N'-dimethyl S-(1-methylpropyl) phosphorodiamidothioate

Phosphorous pentasulfide, 17.8 g (0.08 moles) was added to a solution of N-formyl N,N'-dimethyl S-(1-methylpropyl) phosphorodiamidothioate (14 g, 0.063 mole) in 200 ml of pyridine. The reaction temperature rose exothermatically to 55°C. After stirring for 24 hours at room temperature, the mixture was diluted with 300 ml of ether and filtered through a 5 g of Biosil A (silicic acid). Evaporation of the solvent gave 3.1 g of oil. Purification by high pressure liquid chromatography using one PrePak 500 silica gel column and a mobile phase of 70/30 ethyl acetate/isooctane (by volume) gave 3 g of product (25% of theory).

Example 39) - N-Formyl N,N'-dimethyl S-(1-methylpropyl) phosphorodiamidothioate

Acetic anhydride, 1.76 g (0.017 mole), was added to a solution of N,N'-dimethyl S-(1-methylpropyl) phosphorodiamidothioate, 3.0 g (0.014 moles) and formic acid, 0.69 g (0.015 moles), in 20 ml of methylene chloride. After 7 days at room temperature, 1.76 g of acetic anhydride and 0.69 g of formic acid were added. After an additional

3 days at room temperature the reaction mixture was concentrated, diluted with 50 ml of chloroform, extracted with three 20 ml portions of 5% sodium bicarbonate, dried over 4Å molecular sieves, filtered, and evaporated to give 2.8 g (83% of theory) of product. The compound of the following example was prepared in an analogous manner.

Example 40) - N-Formyl N,N'-dimethyl S-propyl phosphorodiamidodithioate

The following Table I gives the calculated and found elemental analyses for the compounds of foregoing Examples 1-40.

TABLE I

Elemental Analysis

| Ex. No. | Empirical Formula | Elemental Analysis Calculated(Found) C | H | N |
|---|---|---|---|---|
| 1 | $C_7H_{17}N_2O_2PS$ | 37.50(38.21) | 7.58(7.93) | 12.50(12.52) |
| 2 | $C_8H_{19}N_2O_2PS$ | 40.33(40.98) | 7.98(8.65) | 11.76(10.05) |
| 3 | $C_7H_{17}N_2O_2PS$ | 37.50(37.30) | 7.58(7.94) | 12.50(12.50) |
| 4 | $C_6H_{15}N_2O_2PS$ | 34.28(34.83) | 7.19(7.51) | 13.33(13.53) |
| 5 | $C_{11}H_{21}N_2O_2PS$ | 47.82(46.11) | 7.60(7.63) | 10.14(10.08) |
| 6 | $C_9H_{21}N_2O_2PS$ | 42.85(41.81) | 8.33(8.41) | 11.11(11.92) |
| 7 | $C_8H_{19}N_2OPS$ | 40.33(39.66) | 7.98(8.25) | 11.76(10.82) |
| 8 | $C_7H_{17}N_2O_2PS$ | 37.50(35.55) | 7.58(7.60) | 12.50(12.89) |
| 9 | $C_6H_{15}N_2O_2PS$ | 34.28(35.05) | 7.19(7.19) | 13.33(14.55) |
| 10 | $C_8H_{19}N_2OPS$ | 40.33(40.79) | 7.98(8.50) | 11.76(11.94) |
| 11 | $C_5H_{13}N_2O_2PS$ | 30.76(31.04) | 6.66(6.65) | 14.35(14.08) |
| 12 | $C_8H_{19}N_2O_2PS$ | 40.33(40.38) | 7.98(8.12) | 11.76(11.94) |
| 13 | $C_8H_{19}N_2O_2PS$ | 40.33(39.52) | 7.98(8.61) | 11.76(11.98) |
| 14 | $C_8H_{16}F_3N_2O_2PS$ | 32.87(31.98) | 5.47(5.34) | 9.58(9.60) |
| 15 | $C_{16}H_{25}N_2O_2PS$ | 56.47(55.44) | 7.35(7.97) | 8.23(10.42) |
| 16 | $C_{13}H_{20}N_3O_4PS$ | 45.21(45.34) | 5.79(5.94) | 12.17(12.19) |
| 17 | $C_{11}H_{23}N_2O_4PS$ | 39.05(38.43) | 6.80(6.08) | 8.23(10.81) |
| 18 | $C_9H_{21}N_2O_3PS$ | 40.29(40.59) | 7.83(7.90) | 10.44(9.84) |
| 19 | $C_8H_{17}N_2Cl_2PS$ | 31.27(32.10) | 5.58(5.40) | 9.12(8.40) |

TABLE I (continued)

Elemental Analyses

| Ex. No. | Empirical Formula | Elemental Analysis Calculated (Found) C | H | N |
|---|---|---|---|---|
| 20 | $C_9H_{20}N_2BrO_2PS$ | 32.62(36.00) | 6.04(6.98) | 8.46(8.97) |
| 21 | $C_9H_{20}N_2ClO_2PS$ | 37.69(40.27) | 6.98(7.33) | 9.77(11.44) |
| 22 | $C_{13}H_{21}N_2O_2PS$ | 52.00(56.58) | 7.05(7.23) | 9.32(9.74) |
| 23 | $C_{15}H_{23}N_2O_2PS$ | 55.21(55.42) | 7.10(7.64) | 8.58(8.41) |
| 24 | $C_8H_{18}N_2ClO_2PS$ | 35.33(35.21) | 6.65(6.85) | 10.28(9.81) |
| 25 | $C_8H_{18}BrN_2O_2PS$ | 30.29(30.54) | 5.71(6.17) | 8.83(8.79) |
| 26 | $C_{11}H_{23}N_2O_4PS$ | 42.58(42.35) | 7.47(7.64) | 9.03(9.21) |
| 27 | $C_{10}H_{21}N_2O_2PS$ | 45.45(45.27) | 8.01(8.15) | 10.59(10.49) |
| 28 | $C_9H_{19}N_2O_4PS$ | 38.09(33.15) | 6.78(6.21) | 9.92(10.72) |
| 29 | $C_{10}H_{22}ClN_2O_2PS$ | 39.93(39.92) | 7.37(7.74) | 9.31(9.63) |
| 30 | $C_{24}H_{47}N_2O_2PS$ | 62.88(62.32) | 10.26(10.79) | 6.10(6.31) |
| 31 | $C_{10}H_{21}N_2O_2PS$ | 45.45(46.18) | 8.01(8.10) | 10.60(10.40) |
| 32 | $C_{19}H_{23}N_2O_2PS$ | 53.50(53.79) | 7.37(7.59) | 8.91(8.77) |
| 33 | $C_{13}H_{20}N_2ClO_2PS$ | 46.59(45.78) | 6.02(5.94) | 8.37(7.87) |
| 34 | $C_{13}H_{19}Cl_2N_2O_2PS$ | 42.28(42.65) | 5.19(7.79) | 7.59(10.48) |
| 35 | $C_{13}H_{27}N_2O_2PS$ | 50.98(50.24) | 8.88(9.27) | 9.14(9.09) |
| 36 | $C_{14}H_{23}N_2O_3PS$ | 50.91(50.83) | 7.00(7.29) | 8.50(8.25) |
| 37 | $C_9H_{20}BrN_2O_2PS$ | 32.62(36.00) | 6.10(6.98) | 8.40(8.97) |
| 38 | $C_7H_{17}N_2OPS_2$ | 35.00(35.25) | 7.08(7.55) | 11.70(12.22) |
| 39 | $C_7H_{17}N_2OPS_2$ | 35.00(35.30) | 7.08(7.22) | 11.70(11.47) |
| 40 | $C_6H_{15}N_2OPS_2$ | 31.80(31.57) | 6.68(6.90) | 12.38(12.01) |

Initial evaluations were made on the following mite, insect and nematode:

| Code Symbol | Common Name | Latin Name |
|---|---|---|
| TSM | Two-spotted spider mite | *Tetranychus urticae* |
| SAW | Southern armyworm | *Spodoptera eridania* |
| Nema | Southern root-know nematode | *Meloidogyne incognita* |

A test solution containing 600 ppm of test compound was made by dissolving the test compound in a solvent (acetone: methanol, 1:1), adding surfactant and then water to give

an acetone:methanol:water system of 10:10:80 by volume. A 1:1 by weight mixture of an alkylarylpolyetheralcohol (commercially available under the trademark Triton X-155) and a modified phthalic glycerol alkyd resin (commercially available under the trademark Triton B-1956) was utilised at the equivalent of 28 g per 380 liters (1 ounce per 100 U.S. gallons) of test solution and a surfactant.

For the mite test, infested bean (Phaseolus limeanus) leaf discs (1.25 inches - 3.17 cm - in diameter) containing about 50 mites were placed in a Petri dish lid on a moistened piece of cotton. The leaves were then sprayed with the test solution using s rotating turntable, held for 24 hours and then the percent kill was determined.

For the armyworm test, detached bean leaves on pieces of moistened filter paper were sprayed as above for the mite test in similar dishes and allowed to dry. The dishes were infested with 10 third instar southern armyworm larvea. The dishes were covered and after holding for 48 hours, the percent kill was obtained.

For the nematode test, soil was homogeneously inoculated with a macerated blend of tomato roots heavily knotted with the root knot nematode. Ten milliliters of the test solution were added to 200 milliliters of the inoculated soil in a jar to give a concentration by volume of about 30 ppm. The jar was then shaken to ensure thorough mixing, immediately uncapped, and exposed to air for 24 hours. The soil was then placed into a 7.5 cm (3 inch) plastic pot after which time 3 cucumber (Cucumis sativus) seeds were planted. About 23 days thereafter, the cucumber plants were removed from the soil and the root system examined for the presence of knots. A total of 15 knots or less was considered as an acceptable measure of control.

The following Table II gives the results of the foregoing biological evaluations for most of the compounds of foregoing Examples 1-40.

TABLE II

| Example No. | Screening Results, % Control [b] TSM [a] | SAW [a] | NEMA [c] |
|---|---|---|---|
| 1 | 100 | 100 | + |
| 2 | 100 | 100 | + |
| 3 | 100 | 100 | + |
| 4 | 100 | 100 | + |
| 5 | 100 | 100 | + |
| 6 | 100 | 100 | + |
| 7 | 100 | 100 | + |
| 8 | 100 | 100 | + |
| 9 | 100 | 100 | + |
| 10 | 100 | 100 | + |
| 11 | 100 | 100 | + |
| 12 | 100 | 100 | - |
| 13 | 100 | 100 | + |
| 14 | 100 | 100 | + |
| 15 | 100 | 100 | + |
| 16 | 100 | 100 | + |
| 17 | 100 | 40 | + |
| 18 | 100 | 100 | + |
| 19 | 100 | 100 | + |
| 20 | 100 | 100 | + |
| 21 | 100 | 100 | + |
| 22 | 100 | 100 | + |
| 23 | 100 | 100 | + |
| 24 | 100 | 100 | + |
| 25 | 100 | 100 | + |
| 27 | 100 | 100 | + |
| 29 | 100 | 100 | + |
| 30 | 100 | 0 | + |

TABLE II (continued)

| Example No. | Screening Results, % Control[b] TSM[a] | SAW[a] | NEMA[c] |
|---|---|---|---|
| 31 | 100 | 0 | + |
| 32 | 100 | 100 | - |
| 33 | 100 | 100 | + |
| 34 | 100 | 100 | + |
| 35 | 100 | 100 | + |
| 36 | 100 | 100 | + |
| 37 | 100 | 100 | + |
| 38 | 100 | 100 | + |
| 39 | 100 | 100 | + |
| 40 | 100 | 100 | + |

a) TSM = two-spotted mite; SAW = southern armyworm; NEMA = nematode.

b) % control at 600 ppm.

c) + means control 15 knots or less (at 30 ppm in soil).

Some of the S-alkyl phosphorodiamidothioate intermediates of Formula IV (where $X^1$ is oxygen) are novel compounds within the scope of this invention. These novel compounds, which also have arthropocidal and/or nematicidal activity, are of Formula VIII below

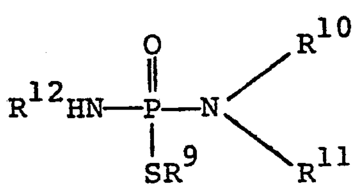

(VIII)

wherein $R^9$ is $C_3$-$C_6$alkyl, e.g. $C_3$ or $C_4$,
$R^{10}$ is hydrogen or methyl,
$R^{11}$ is $C_1$-$C_3$alkyl or allyl, and
$R^{12}$ is $C_1$-$C_3$alkyl or allyl.

A particularly preferred sub-class of compounds of Formula VIII are those in which $R^9$ is $C_3$-$C_6$alkyl, preferably

$C_3$-$C_4$alkyl, $R^{10}$ is hydrogen, $R^{11}$ is methyl and $R^{12}$ is methyl. The preparation of the intermediates of Formula VIII has heretofore been generally described but specific illustrative preparations are given in Preparations 1-9 which follow.

Preparation 1) - <u>N,N'-Dimethyl S-(1-methylpropyl) phosphorodiamidothioate</u>

Excess methylamine was bubbled into an ice-cooled solution of S-(1-methylpropyl) phosphorodichloridothioate, 11 g (0.054 mole), in 50 ml of tetrahydrofuran (THF). The reaction was stirred for 1/2 hour at room temperature, diluted with 200 ml of ether, filtered to remove the methylamine hydrochloride, and evaporated to give 10 g (94% of theory) of product as an orange oil.

Preparation 2) - <u>N,N'-Dimethyl S-(2-methylpropyl) phosphorodiamidothioate</u>

Excess methylamine was bubbled into a solution of S-(2-methylpropyl) phosphorodichloridothioate, 50 g (0.24 mole), in 300 ml of ether. The reaction was stirred 2-1/2 hours at room temperature and filtered. The ether solution was washed with 100 ml of water, dried over 4Å molecular sieves, and evaporated to an oil. The water wash was saturated with sodium chloride and extracted with ether. The ether solution was dried over 4Å molecular sieves and dried to an oil. The two oils were combined, yielding 41 g (85% of theory).

The following intermediates were prepared in a manner analogous to that of Preparation 2.

Preparation 3) - N,N'-Diethyl S-propyl phosphorodiamidothioate

Preparation 4) - N,N'-Diethyl S-(1-methylpropyl) phosphorodiamidothioate

Preparation 5) - S-(1-Methylpropyl) N,N'-(2-propenyl) phosphorodiamidothioate

Preparation 6) - S-(1-Methylpropyl) N,N'-dipropyl phosphorodiamidothioate

Preparation 7) - N,N'-Dimethyl S-(1-methylpropyl) phosphorodiamidothioate

Preparation 8) - <u>N,N',N'-Trimethyl S-(1-methylpropyl) phosphorodiamidothioate</u>

A solution of dimethylamine, 5.8 g (0.13 mole), and triethylamine, 13.0 g (0.13 mole), in 100 ml of THF was added dropwise to an ice-cooled solution of S-(1-methylpropyl) phosphorodichloridothioate. 27 g (0.13 mole), in 200 ml of THF. The reaction was stirred for 1 hour at room temperature. A solution of methylamine, 3.96 g (0.13 mole), and triethylamine, 13.0 g (0.13 mole), was added at icebath temperature. The reaction was stirred for 2 hours at room temperature and stood overnight. The triethylamine hydrochloride was filtered and the THF was evaporated. Ether, 150 ml, and hexane, 100 ml were added, precipitating more triethylamine hydrochloride. The suspension was filtered through Super-Cel (diatomaceous silica) and the solvents were evaporated to give 26 g (95% of theory) of oil.

The following intermediate was prepared in a manner analogous to that of Preparation 8.

Preparation 9) - N,N',N'-Trimethyl S-propyl phosphorodiamidothioate

Elemental analysis figures, calculated and found, are given in Table III below for most of the compounds of Preparations 1-9.

TABLE III

Elemental Analysis

| Prep. No. | Empirical Formula | Elemental Analysis Calculated (Found) C | H | N |
|---|---|---|---|---|
| 1 | $C_6H_{17}N_2OPS$ | 36.73(36.43) | 8.67(9.02) | 14.28(14.09) |
| 2 | $C_6H_{17}N_2OPS$ | 36.73(36.32) | 8.67(8.83) | 14.28(14.04) |
| 3 | $C_7H_{19}N_2OPS$ | 39.98(39.41) | 9.10(9.35) | 13.32(12.77) |
| 7 | $C_5H_{15}N_2OPS$ | 32.96(32.61) | 8.24(8.23) | 15.38(15.40) |
| 8 | $C_8H_{19}N_2OPS$ | 43.24(41.00) | 8.55(8.65) | 12.61(10.10) |

Most of the compounds of Preparations 1-9 were screened for biological activity in the manner described earlier for the Formula I compounds of Examples 1-40 and the results obtained are given in Table IV which follows and in which the symbols a, b and c have the meanings assigned in Table II.

TABLE IV

Screening Results, % Control [b]

| Preparation No. | TSM [a] | SAW [a] | NEMA [c] |
|---|---|---|---|
| 1 | 100 | 100 | + |
| 2 | 100 | 100 | + |
| 3 | 100 | 100 | + |
| 7 | 100 | 0 | + |

The compounds of the invention (i.e. those of Formula I and VIII) are useful for the protection of plants from the attack of harmful pests. The compounds are particularly effective against arthropods (in varying stages of development) and are specially effective against members of the Class Arachnoidea, which includes the Order Acarina, as represented by mites and ticks, and the Class Insecta, the insects. Among the arthropods which are effectively controlled by the compounds of the present invention are the chewing insects, e.g. the southern armyworm (<u>Spodop</u>-

tera eridania), mites, e.g. the two-spotted spider mite (Tetranychus urticae) and others.

The compounds of this invention also display activity as fungicides particularly in combating Phytopathogenic Fungi.

Furthermore, as is evident from Table II and IV, compounds of this invention possess nematicidal activity. Among the nematodes which are effectively controlled by the compounds of the present invention are soil nematodes, typified by the southern root knot nematode (Meloidogyne incognita).

Generally, control (i.e. combating) of pests is achieved in accordance with this invention by application of the compounds in pesticidally effective amounts (e.g. arthropodicidally effective amounts) either directly to the pests to be controlled or to the loci to be freed of or protected from attack by such pests. Of particular importance is the use of the compounds of the invention to protect vendible plant matter, notably living plant matter which is or yields a vendible agronomic crop. Plant protection loci may be defined as the aerial and subterranean portions of plants or propagative subunits and their immediate or future environs. For example, food, fiber, forage, forest and ornamental crops and stored products thereof represent plant protection loci. Thus, the compounds can be deposited on or in the soil, plants, insects, manmade structures, or other substrates as deposits, coatings, etc. Accordingly, compounds of the present invention provide utility as the essential active ingredient of pesticidal compositions suitable for agricultural and sanitary purposes.

The terms "control" or "combating" as employed herein includes any means which adversely affects the existence or growth of a living organism. Such means can comprise a complete killing action, eradication, arresting in growth,

inhibition, reduction in number or any combination thereof.

In their application as pesticides one or more of the compounds of the invention, i.e. the compounds of Formula I and VIII, will be used in conjunction with an agronomically acceptable carrier or diluent so as to provide a pesticidal composition which, in general, will contain from 0.1 to 99.9%, more usually 1 to 99% and even more usually 1 to 88%, by weight of active pesticidal component comprising one or more of the compounds of the invention. These pesticidal compositions may be in the form of ready-for use dusts, solutions, emulsions, suspensions, granules or pellets; alternatively they may be in the form of concentrated solutions, wettable powders, emulsifiable concentrates, flowable emulsion concentrates, pastes or dust concentrates each for dilution with, as the case maybe, additional liquid (usually water) or finely divided solids to give diluted solutions, suspensions, emulsions or dusts which are then directly usable as pesticidal compositions.

By the term "agronomically acceptable carrier or diluent" as used above is meant a substance which can be utilized to dissolve, disperse, diffuse or otherwise dilute the active ingredient without impairing the effectiveness of the active ingredient and which does no permanent damage to such loci as soil, equipment and agronomic crops.

When the compounds of the invention are formulated as wettable powders, emulsifiable concentrates, dusts, granular formulations or flowable emulsion concentrates, one or more of the compounds is extended with an agronomically acceptable liquid or solid diluent or carrier and, when desired or necessary, suitable surfactants are also incorporated. Surfactants commonly used in the art can be found in the John W. McCutcheon, Inc. publication "Detergents and Emulsifiers Annual".

The compounds provided by the invention can be taken up or mixed with a finely particled solid carrier, as for example, clays, inorganic silicates, carbonates, and silicas. Organic carriers can also be employed. Dust concentrates are commonly made wherein the active ingredient is present in the range of about 10 to about 20% by weight although dust concentrates may also be made having an active ingredient content of 10 to 80%, e.g. 20 to 80%, by weight. For ultimate applications, these concentrates are normally extended with additional finely divided solid to give an active ingredient content of from about 1 to about 20% by weight.

Granular formulations are made using a granular or pelletized form of carrier, such as granular clays, vermiculite, charcoal or maize cobs, and usually contain the active ingredient in an amount from about 0.1 to about 25% by weight, more usually 5 to 15% by weight. Granules, which typically have an average diameter of about 0.5 to 2 mm or comparable sieve sizes, can be made by mixing the active pesticidal ingredient with finely divided inert solids, if necessary with the addition of a binder, and then forming the mixture into granules in a granulating device. Alternatively, pre-formed granules of an inert solid can be coated or impregnated with the active pesticidal ingredient.

Wettable powder formulations can be made by incorporating the active ingredient in an inert, finely divided solid carrier (eg Kaolin) along with a surfactant which can be one or more emulsifying, wetting, dispersing or spreading agents or blend of these. In such formulations, the active ingredient content is usually in the range of about 1 to about 35%, more usually 10 to 35%, by weight. Surfactants are usually present in an amount from about 0.5 to about 10% by weight. Typical surfactants are sodium lauryl sulfate and sodium lignosulfonate.

One convenient method for preparing a solid formulation is to impregnate the active ingredient onto the solid carrier by means of a volatile solvent such as acetone. In this manner, adjuvants, such as activators, adhesives, plant nutrients, synergists and various surfactants can also be incorporated.

Emulsifiable concentrate formulations can be prepared by dissolving the active ingredient in an agronomically acceptable organic solvent and adding a solvent-soluble emulsifying agent. Suitable solvents are usually water-immiscible and can be found in the hydrocarbon, ketone, ester, alcohol and amide groups of organic solvents. Mixtures of solvents are commonly employed. The surfactants useful as emulsifying agents can constitute about 0.5 to about 10% by weight of emulsifiable concentrate and can be anionic, cationic or non-ionic in character. The concentration of the active ingredient is from about 1 to about 50%, more usually 20 to 50%, by weight.

Flowable emulsion concentrates usually contain the active ingredient in an amount from 1 to 50% by weight and more usually 20 to 40% by weight.

The compounds of the invention can be applied as pesticides by techniques well known in the art. Usually, this will involve the use of a composition containing the active ingredient and an agronomically acceptable carrier. However, in certain situations, it may be desirable and advantageous to apply the compounds directly onto the loci to be protected from or freed of pests without the benefit of any substantial amount of carrier. This is a particularly effective method when the physical nature of the toxicants is such as to permit what is known as "low-volume" application, that is, when the compounds are in liquid form or substantially soluble in higher boiling solvents.

The application rate will, of course, vary depending upon the purpose for such application, the active ingredient being utilized, the frequency of dissemination and the like.

For use as insecticides and acaricides, dilute sprays can be applied at concentrations of about 5.4g to about 11 kg (about 0.01 to about 20 pounds) of the phosphorodiamido-(di)thioate ingredient per 378.5 litres (100 U.S. gallons) of spray. They are usually applied at about 54g to 11 kg (about 0.1 to about 5 pounds) per 378.5 litres (100 U.S. gallons). In more concentrated sprays, the active ingredient is increased by a factor of about 2 to about 12. With dilute sprays, applications are usually made to the plants until run off is achieved, whereas with more concentrated low-volume sprays, the materials are applied as mists.

For use as a fungicide, the compounds of this invention can be applied as fungicidal sprays by methods commonly employed, such as, conventional high-gallonage hydraulic sprays, low-gallonage sprays, air-blast sprays, aerial sprays and dusts. The dilution and rate of application will depend upon the type of equipment employed, the method of application and diseases to be controlled, but the preferred effective amount is usually about 54g to about 27 kg (about 0.1 lb. to about 50 lbs.) per 0.4 ha (one acre) of the active ingredient.

As a fungicidal seed protectant, the amount of toxicant coated on the seed is usually at a dosage rate of about 2.8g to about 567g (about 0.1 to about 20 ounces) per 54 kg (one hundred pounds) of seed. As a soil fungicide the chemical can be incorporated in the soil or applied to a surface usually at a rate of about 54g to about 27 kg (about 0.1 to about 50 lbs.) per 0.4 ha (one acre). As a foliar fungicide, the toxicant is usually applied to growing plants at a rate of about 136g to about 5.4 kg (about

0.25 to about 10 lbs.) per 0.4 ha (one acre).

For use as a nematocide systemic insecticide, or as a soil insecticide, the compounds of the invention can be applied as a solid formulation, preferably a granular formulation or as a diluted liquid preparation, by broadcasting, sidedressing soil incorporation or seed treatment.

The pesticidal compositions can also be added to transplant or irrigation water or to units employed in propagation, such as seeds, tubers, roots, seedlings, etc., so as to disinfect and/or provide residual protection from nematodes, soil insects (and mites) and via systemic uptake, foliar pests. The application rate can be from about 272g to about 27 kg (about 0.5 to about 50 pounds)per 0.4 ha (one acre); however, higher rates can also be used. The preferred rate is from about 544g to about 13.5 kg (about 1 to about 25 pounds) per 0.4 ha (one acre). For soil incorporation, the compounds of this invention can be mixed with the soil or other growth medium at a rate of about 1 to about 100 ppm of active ingredient.

The compounds of this invention can be utilized as the sole pesticidal agents or they can be employed in conjunction with other different pesticides including bactericides, fungicides, herbicides, insecticides, acaricides and nematicides and comparable pesticides.

The following examples of formulations are given by way of illustration; percentages are on a weight basis.

Wettable Powder

a) 1%

1.0% active ingredient
0.5% sodium lauryl sulfate
3.0% sodium lignosulfonate
95.5% kaolin (particle size 10-50 microns)

b) 35%

35.0% active ingredient
0.5% sodium lauryl sulfate
3.0% sodium lignosulfonate
20.0% precipitated silica, particle size 1 micron
41.5% kaolin, particle size 10.50 microns

Granules

a) 0.1%

0.1% active ingredient
99.9% Celatom MP78 (diatomaceous earth) granules (average diameter 1.5 mm)

b) 25%

25% active ingredient
70% attapulgite granules (average diameter 1.5 mm or passes through a sieve opening of 1.68 mm in a U.S. Standard Screen)
5% pyrogenic silica, particle size 1 micron. A solution of the active ingredient is sprayed onto the attapulgite granules and the pyrogenic silica is then added

c) 10%

10% active ingredient
90% Agsorb MB (Montmorillinite clay - Mississippi Brown)

d) 10%

10% active ingredient
90% maize cob granules (average diameter 1.5 mm or passes through a sieve opening of 1.68 mm in a U.S. Standard Screen)

e) 5%

5% active ingredient
95% walnut shell granules (average diameter 1.5 mm or passes through a sieve opening of 1.68 mm

in a U.S. Standard Screen).

Where not stated, the above granular formulations are prepared by dissolving the active ingredient in 3 parts by weight xylene and this solution is sprayed on the granular material and the xylene is subsequently evaporated. Alternatively the above granular formulations are prepared by dissolving the active ingredient in 4 parts by weight of toluene and dripping this solution onto the granular material in a tumbling jar. The toluene is subsequently evaporated.

Flowable Emulsion Concentrate

a) 1%

| | |
|---|---|
| 1% | active ingredient |
| 41% | cyclohexane |
| 57.6% | xylene |
| 0.4% | mixture of calcium dodecylbenzenesulfonate and octylphenolethoxylate |

b) 50%

| | |
|---|---|
| 50% | active ingredient |
| 15% | xylene |
| 25% | cyclohexanone |
| 10% | mixture of calcium dodecylbenzenesulfonate and octylphenolethoxylate |

Dust Concentrate

a) 10%

| | |
|---|---|
| 10% | active ingredient |
| 80% | montmorillonite |

b) 20%

| | |
|---|---|
| 20% | active ingredient |
| 75% | montmorillonite |
| 5% | precipitated silica of particle size 1 micron. |

In the above formulations, the active ingredient is the compound of any one of foregoing Examples 1 to 40 and Preparations 1 to 9. The active ingredient in each of the above formulations is preferably the compound of Example 1.

A sub-class of compounds of Formula I which may be singled out for mention are those in which $R^1$ is hydrogen or a substituent as defined for Formula I except alkadienyl and alkoxycarbonyl, X is preferably oxygen, one of $R^3$ and $R^4$ is hydrogen or $C_1$-$C_3$alkyl and the other is $C_1$-$C_3$alkyl or $C_3$-$C_6$alkenyl (particularly $C_3$ such as 2-propenyl) and $R^5$ is $C_1$-$C_6$alkyl or $C_3$-$C_6$alkenyl (particularly $C_3$ such as 2-propenyl). Of this sub-class, particularly noteworthy are compounds wherein one of $R^3$ and $R^4$ is hydrogen or $C_1$-$C_3$alkyl and the other is $C_1$-$C_3$alkyl and $R^5$ is $C_1$-$C_6$ alkyl.

All the novel compounds provided by the invention are preferably purified so as to be free, to a large degree, of impurities resulting from their preparation, notably impurities in the form of unreacted precursors and by-products. Thus the compounds will usually contain, in order of preference, $<0.1\%$, $<0.5\%$, $<1\%$, $<5\%$, $<10\%$ and $<15\%$ by weight of such impurities based on the combined weight of the compound(s) in question and the impurities. The above applies particularly to compounds of Formula I (wherein $R^1$ = H) and which have been prepared by hydrolysi of the precursors described earlier or analogues of such precursors.

In the case of a compound of formula I (wherein $R^1$ = H) which has been obtained by the direct hydrolysis of a precursor and which, in consequence, is associated with by-product(s) resulting from such hydrolysis, the compound

is preferably associated with less than 20 % (more preferably less than 15 %, even more preferably less than 5 % and best of all less than 2 %) by weight of (a), if present at all, said precursor plus (b) said by-product(s), the amount of (a) plus (b) being based on the combined weight of said compound, precursor and by-products.

Claims (for all countries except Austria):

1. A compound of the formula:

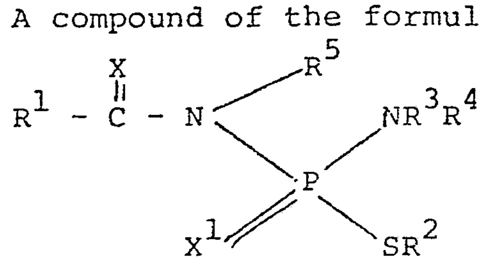

wherein $R^1$ is hydrogen (particularly when X is oxygen, one of $R^3$ and $R^4$ is hydrogen or $C_1$-$C_3$alkyl and the other is $C_1$-$C_3$alkyl or $C_3$-$C_6$alkenyl and $R^5$ is $C_1$-$C_6$alkyl or $C_3$-$C_6$alkenyl); ($C_1$-$C_{12}$alkyl; $C_1$-$C_{12}$alkyl substituted with up to three of the same or different substituents selected from chloro, bromo and fluoro; $C_1$-$C_{12}$alkyl substituted with one substituent selected from cyano, nitro, ($C_1$-$C_6$alkoxy, $C_1$-$C_6$alkylthio, $C_1$-$C_6$alkylsulfinyl, $C_1$-$C_6$alkylsulfonyl, ($C_1$-$C_6$alkyl)carbonyl, ($C_1$-$C_6$alkoxy)carbonyl, ($C_1$-$C_6$alkyl)carbonyloxy, mono- or di-($C_1$-$C_6$alkyl)aminocarbonyl, phenoxy, phenylthio, phenylsulfinyl, phenylsulfonyl, phenylcarbonyl, phenoxycarbonyl, phenylcarbonyloxy, phenylaminocarbonyl, ($C_3$-$C_6$alkenyl)oxycarbonyl, ($C_3$-$C_6$alkenyl)carbonyl loxy, aminocarbonyl, and ($C_1$-$C_6$alkyl)carbonyl amino; $C_3$-$C_{12}$alkynyl; $C_2$-$C_{12}$alkenyl; $C_4$-$C_{17}$ alkadienyl; $C_3$-$C_6$cycloalkyl; ($C_1$-$C_6$alkoxy)-carbonyl; phenyl; phenyl$C_1$-$C_5$alkyl; phenyl or phenyl$C_1$-$C_5$alkyl each ring-substituted with up to three of the same or different substituents selected from cyano, nitro, halogen, $C_1$-$C_6$alkyl, $C_1$-$C_6$alkoxy, $C_1$-$C_6$alkylthio, $C_1$-$C_6$alkylsulfinyl, $C_1$-$C_6$alkylsulfonyl, phenoxy, $C_1$-$C_6$haloalkyl, trifluoromethyl, mono- or di-($C_1$-$C_6$alkyl)aminocarbonyl, ($C_1$-$C_6$alkoxy)carbonyl, ($C_1$-$C_6$alkyl)carbonyl,

($C_1$-$C_6$alkyl)carbonyloxy, phenylthio, phenylthio, phenylsulfinyl, phenylsulfonyl, benzyl, phenylcarbonyl, phenoxycarbonyl, phenylcarbonyloxy, phenylaminocarbonyl, ($C_3$-$C_6$ alkenyl)oxycarbonyl, ($C_3$-$C_6$alkenyl)carbonyloxy, aminocarbonyl, and ($C_1$-$C_6$alkyl)carbonylamino;

$R^2$ is $C_2$-$C_6$alkyl;

$R^3$ (when not joined to $R^5$) is hydrogen, $C_1$-$C_3$alkyl or $C_3$-$C_6$alkenyl;

$R^4$ is hydrogen, $C_1$-$C_3$alkyl or $C_3$-$C_6$alkenyl;

$R^5$ (when not joined to $R^3$) is hydrogen; $C_1$-$C_{12}$alkyl; $C_1$-$C_{12}$alkyl substituted with one substituent selected from cyano, nitro, $C_1$-$C_6$alkoxy, $C_1$-$C_6$alkylthio, $C_1$-$C_6$alkylsulfinyl, $C_1$-$C_6$alkylsulfonyl, ($C_1$-$C_6$alkyl)carbonyl, ($C_1$-$C_6$alkoxy)-carbonyl, ($C_1$-$C_6$alkyl)carbonyloxy, mono- or di-($C_1$-$C_6$alkyl)aminocarbonyl, phenoxy, phenylthio, phenylsulfinyl, phenylsulfonyl, phenylcarbonyl, phenoxycarbonyl, phenylcarbonyloxy, phenylaminocarbonyl, ($C_3$-$C_6$alkenyl)oxycarbonyl, ($C_3$-$C_6$alkenyl)carbonyloxy, aminocarbonyl and ($C_1$-$C_6$alkyl)carbonylamino; $C_3$-$C_{12}$alkynyl; $C_3$-$C_{12}$alkenyl; $C_3$-$C_6$cycloalkyl; phenyl; phenyl-$C_1$-$C_5$alkyl; phenyl or phenyl$C_1$-$C_5$alkyl each ring-substituted with up to three of the same or different substituents selected from cyano, nitro, halogen, $C_1$-$C_6$alkyl, $C_1$-$C_6$alkoxy, $C_1$-$C_6$alkylthio, $C_1$-$C_6$alkylsulfinyl, $C_1$-$C_6$alkylsulfonyl, phenoxy, $C_1$-$C_6$haloalkyl, mono- or di-($C_1$-$C_6$alkyl)aminocarbonyl, ($C_1$-$C_6$alkoxy)-carbonyl, ($C_1$-$C_6$alkyl)carbonyl, ($C_1$-$C_6$alkyl)-carbonyloxy, phenylthio, phenylsulfinyl, phenylsulfonyl, benzyl, phenylcarbonyl, phenoxycarbonyl, phenylcarbonyloxy, phenylaminocarbonyl, ($C_3$-$C_6$alkenyl)oxycarbonyl, ($C_3$-$C_6$alkenyl)carbonyloxy, aminocarbonyl and ($C_1$-$C_6$alkyl)carbonylamino;

$R^3$ and $R^5$ (when joined together) can be taken together to form a heterocyclic ring of the formula:

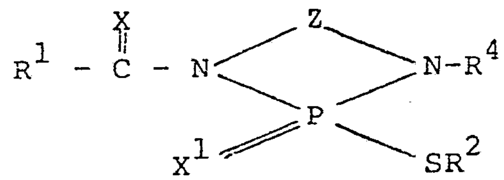

wherein Z is a $-CH_2CH_2-$ group, a $-CH_2CH_2CH_2-$ group, or $-CH_2CH_2CH_2CH_2-$ group;

X is oxygen or sulfur; and

$X^1$ is oxygen or sulfur.

2. A compound according to Claim 1, wherein $R^1$ is hydrogen or a substituent other than alkadienyl and alkoxycarbonyl (particularly $CH_3$, $C_2H_5$, $CH_3OCH_3$, cyclopropyl or $CF_3$), X is oxygen, one of $R^3$ and $R^4$ is hydrogen or $C_1$-$C_3$ alkyl and the other is $C_1$-$C_3$alkyl or 2-propenyl and $R^5$ is $C_1$-$C_6$alkyl or 2-propenyl.

3. A compound according to Claim 1, wherein $R^1$ is hydrogen, $C_1$-$C_{12}$alkyl, halo($C_1$-$C_6$)alkyl, ($C_1$-$C_4$alkoxy)carbonyl($C_1$-$C_6$alkyl), ($C_1$-$C_4$alkoxy)$C_1$-$C_6$alkyl, phenoxy$C_1$-$C_6$ alkyl, phenyl optionally substituted with nitro or halo, phenyl($C_1$-$C_5$)alkyl, $C_3$-$C_6$cycloalkyl, or $C_3$-$C_6$alkenyl; $R^3$ is $C_1$-$C_3$-alkyl or $C_3$-$C_6$alkenyl, $R^4$ is hydrogen or $C_1$-$C_3$alkyl and $R^5$ is $C_1$-$C_6$-alkyl or $C_3$-$C_6$alkenyl.

4. A compound according to Claim 1, wherein $R^1$ is ($C_1$-$C_6$alkoxy)-carbonyl or $C_4$-$C_{17}$alkadienyl.

5. A compound according to Claim 1 wherein $R^1$ is hydrogen, methyl, ethyl, methoxymethyl, cyclopropyl or trifluoromethyl, $R^2$ is $C_3$-$C_4$alkyl $R^3$ is $C_1$-$C_2$alkyl or $C_3$alkenyl, $R^4$ is hydrogen or methyl and $R^5$ is hydrogen, methyl or ethyl.

6. A compound according to Claim 1 wherein (1) $R^1$ is hydrogen, $R^2$ is 1-methylethyl or 1-methylpropyl, $R^3$ is methyl, $R^4$ is hydrogen, $R^5$ is methyl, X is oxygen and $X^1$ is oxygen, (2) $R^1$ is hydrogen, $R^2$ is 1-methylpropyl, $R^3$ is methyl, $R^4$ is hydrogen, $R^5$ is methyl, X is

sulfur and $X^1$ is oxygen, (3) $R^1$ is hydrogen, $R^2$ is 1-methylpropyl, $R^3$ is methyl, $R^4$ is hydrogen, $R^5$ is ethyl, X is oxygen and $X^1$ is oxygen or (4) $R^1$ is methyl, trifluoromethyl, methoxymethyl, or cyclopropyl, $R^2$ is 1-methylpropyl, $R^3$ is methyl, $R^4$ is hydrogen, X is oxygen and $X^1$ is oxygen.

7. A compound of the formula:

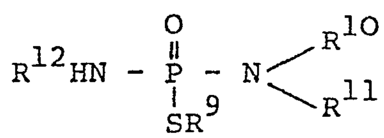

wherein $R^9$ is $C_3$-$C_6$alkyl;
$R^{10}$ is hydrogen or methyl;
$R^{11}$ is $C_1$-$C_3$alkyl or allyl; and
$R^{12}$ is $C_1$-$C_3$alkyl or allyl.

8. A compound according to Claim 7, wherein $R^9$ is $C_3$-$C_4$alkyl, $R^{10}$ is hydrogen, $R^{11}$ is methyl and $R^{12}$ is methyl.

9. A pesticidal composition containing an active pesticidal component and an agronomically acceptable diluent or carrier, wherein the active component comprises one or more preformed compounds according to any one of Claims 1 - 8 and is present in an amount of from 0.1 to 99.9%, preferably 1 to 99%, by weight of the composition, the composition preferably being in the form of granules containing 0.1 to 25% by weight of one or more of said compounds.

10. A method of protecting living plant matter against deterioration due to attack by pests in the form of phytopathogenic fungi, acarids, insects and/or nematodes, which method comprises applying directly to the pests, or to the locus to be protected from the pests, one or more compounds according to any one of Claims 1 - 8, the plant matter being that which is or yields a vendible agronomic crop.

11. A method for the preparation of a compound according to Claim 1, wherein $R^1$ is hydrogen, which comprises (1) formylating a compound of the formula:

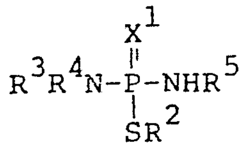

(where $R^2$, $R^3$, $R^4$, $R^5$ and $X^1$ are defined in Claim 1) by reaction with formic acetic anhydride, preferably in the presence of an inert solvent and preferably at a temperature in the range from -10°C to 100°C or (2) hydrolyzing a compound of the formula:

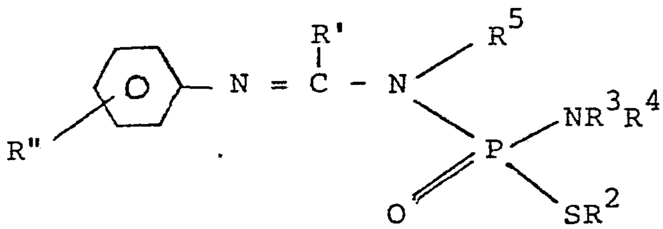

(where $R^2$, $R^3$, $R^4$ and $R^5$ are as defined in Claim 1, R' is hydrogen or alkyl and R" is hydrogen or one or more ring-substituents, and then recovering the desired product in substantially pure form, the hydrolysis preferably being carried out at a temperature from -10°C to 100°C.

12. A method for the preparation of a compound according to Claim 1, wherein $R^1$ is other than hydrogen, which comprises contacting (1) an acyl halide of the formula:

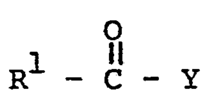

(where $R^1$ is as defined in Claim 1 but is not hydrogen and Y is chlorine or bromine), (2) a pyridine of the formula:

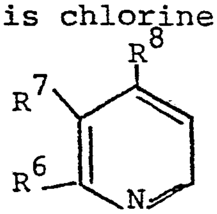

(where $R^6$ and $R^7$ - when not joined - are hydrogen; $R^6$ and $R^7$ - when joined - form the B ring of quinoline; $R^8$ - when not joined to $R^7$ - is hydrogen, amino, mono- or di-$(C_1-C_6)$alkylamino or a nitrogen-containing $(C_2-C_6)$heterocyclic

ring bonded at nitrogen to the pyridine ring; and $R^7$ and $R^8$ - when joined - form the B ring of isoquinoline) and (3) a compound of the formula:

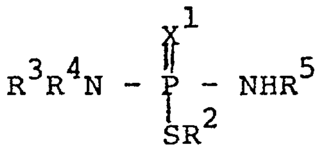

(where $R^2$, $R^3$, $R^4$, $R^5$ and $X^1$ are as defined in Claim 1), the contacting of (1), (2) and (3) being preferably carried out at a temperature from -20°C to 100°C and preferably being carried out in the presence of an inert solvent.

13. A method for the preparation of a compound according to Claim 1, wherein $R^1$ is other than hydrogen, which comprises reacting a compound of the formula:

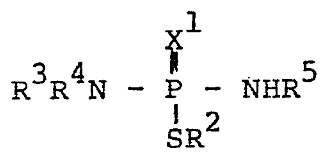

(where $R^2$, $R^3$, $R^4$, $R^5$ and $X^1$ are defined in Claim 1) with (1) a compound of the formula:

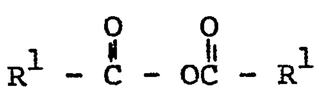

(where $R^1$ is as defined in Claim 1 but is not hydrogen) or (2) aluminum chloride and a compound of the formula:

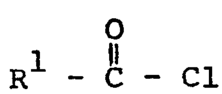

(where $R^1$ is as defined in Claim 1 but is not hydrogen), the reaction preferably being carried out at a temperature in the range from -10°C to 100°C and preferably in the presence of an inert solvent.

14. A compound according to any one of Claims 1 - 3, 5 and 6, being a compound of formula I (wherein $R^1$ = H) which has been obtained by the direct hydrolysis of a precursor and which, in consequence, is associated with by-product(s) resulting from such hydrolysis, the compound is preferably associated with less than 20 % (more preferably less than 15 %, even more preferably less than 5 % and best of all less than 2 %) by weight of (a), if present at all, said precursor plus (b) said by-product(s), the amount of (a) plus (b) being based on the combined weight of said compound, precursor and by-products.

Claims (only for Austria):

1. A pesticidal composition containing an active pesticidal component and an agronomically acceptable diluent or carrier, wherein the active component comprises one or more preformed compounds of the formula:

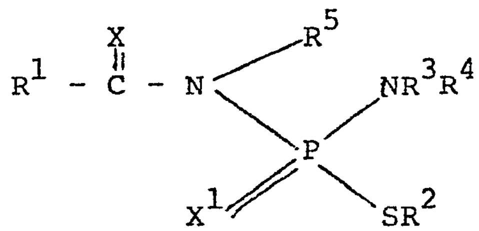

wherein $R^1$ is hydrogen (particularly when X is oxygen, one of $R^3$ and $R^4$ is hydrogen or $C_1$-$C_3$alkyl and the other is $C_1$-$C_3$alkyl or $C_3$-$C_6$alkenyl and $R^5$ is $C_1$-$C_6$alkyl or $C_3$-$C_6$alkenyl); ($C_1$-$C_{12}$alkyl; $C_1$-$C_{12}$alkyl substituted with up to three of the same or different substituents selected from chloro, bromo and fluoro; $C_1$-$C_{12}$alkyl substituted with one substituent selected from cyano, nitro, ($C_1$-$C_6$alkoxy, $C_1$-$C_6$alkylthio, $C_1$-$C_6$alkylsulfinyl, $C_1$-$C_6$alkylsulfonyl, ($C_1$-$C_6$alkyl)carbonyl, ($C_1$-$C_6$alkoxy)carbonyl, ($C_1$-$C_6$alkyl)carbonyloxy, mono- or di-($C_1$-$C_6$alkyl)aminocarbonyl, phenoxy, phenylthio, phenylsulfinyl, phenylsulfonyl, phenylcarbonyl, phenoxycarbonyl, phenylcarbonyloxy, phenylaminocarbonyl, ($C_3$-$C_6$alkenyl)oxycarbonyl, ($C_3$-$C_6$alkenyl)carbonylloxy, aminocarbonyl, and ($C_1$-$C_6$alkyl)carbonylamino; $C_3$-$C_{12}$alkynyl; $C_2$-$C_{12}$alkenyl; $C_4$-$C_{17}$ alkadienyl; $C_3$-$C_6$cycloalkyl; ($C_1$-$C_6$alkoxy)-carbonyl; phenyl; phenyl$C_1$-$C_5$alkyl; phenyl or phenyl$C_1$-$C_5$alkyl each ring-substituted with up to three of the same or different substituents selected from cyano, nitro,

halogen, $C_1$-$C_6$alkyl, $C_1$-$C_6$alkoxy, $C_1$-$C_6$alkylthio, $C_1$-$C_6$alkylsulfinyl, $C_1$-$C_6$alkylsulfonyl, phenoxy, $C_1$-$C_6$haloalkyl, trifluoromethyl, mono- or di-($C_1$-$C_6$alkyl)aminocarbonyl, ($C_1$-$C_6$alkoxy)carbonyl, ($C_1$-$C_6$alkyl)carbonyl, ($C_1$-$C_6$alkyl)carbonyloxy, phenylthio, phenylthio, phenylsulfinyl, phenylsulfonyl, benzyl, phenylcarbonyl, phenoxycarbonyl, phenylcarbonyloxy, phenylaminocarbonyl, ($C_3$-$C_6$ alkenyl)oxycarbonyl, ($C_3$-$C_6$alkenyl)carbonyloxy, aminocarbonyl, and ($C_1$-$C_6$alkyl)carbonylamino;

$R^2$ is $C_2$-$C_6$alkyl;

$R^3$ (when not joined to $R^5$) is hydrogen, $C_1$-$C_3$alkyl or $C_3$-$C_6$alkenyl;

$R^4$ is hydrogen, $C_1$-$C_3$alkyl or $C_3$-$C_6$alkenyl;

$R^5$ (when not joined to $R^3$) is hydrogen; $C_1$-$C_{12}$alkyl; $C_1$-$C_{12}$alkyl substituted with one substituent selected from cyano, nitro, $C_1$-$C_6$alkoxy, $C_1$-$C_6$alkylthio, $C_1$-$C_6$alkylsulfinyl, $C_1$-$C_6$alkylsulfonyl, ($C_1$-$C_6$alkyl)carbonyl, ($C_1$-$C_6$alkoxy)carbonyl, ($C_1$-$C_6$alkyl)carbonyloxy, mono- or di-($C_1$-$C_6$alkyl)aminocarbonyl, phenoxy, phenylthio, phenylsulfinyl, phenylsulfonyl, phenylcarbonyl, phenoxycarbonyl, phenylcarbonyloxy, phenylaminocarbonyl, ($C_3$-$C_6$alkenyl)oxycarbonyl, ($C_3$-$C_6$alkenyl)carbonyloxy, aminocarbonyl and ($C_1$-$C_6$alkyl)carbonylamino; $C_3$-$C_{12}$alkynyl; $C_3$-$C_{12}$alkenyl; $C_3$-$C_6$cycloalkyl; phenyl; phenyl-$C_1$-$C_5$alkyl; phenyl or phenyl$C_1$-$C_5$alkyl each ring-substituted with up to three of the same or different substituents selected from cyano, nitro, halogen, $C_1$-$C_6$alkyl, $C_1$-$C_6$alkoxy, $C_1$-$C_6$alkylthio, $C_1$-$C_6$alkylsulfinyl, $C_1$-$C_6$alkylsulfonyl, phenoxy, $C_1$-$C_6$haloalkyl, mono- or di-($C_1$-$C_6$alkyl)aminocarbonyl, ($C_1$-$C_6$alkoxy)-

carbonyl, ($C_1$-$C_6$alkyl)carbonyl, ($C_1$-$C_6$alkyl)-carbonyloxy, phenylthio, phenylsulfinyl, phenylsulfonyl, benzyl, phenylcarbonyl, phenoxycarbonyl, phenylcarbonyloxy, phenyl-aminocarbonyl, ($C_3$-$C_6$alkenyl)oxycarbonyl, ($C_3$-$C_6$alkenyl)carbonyloxy, aminocarbonyl and ($C_1$-$C_6$alkyl)carbonylamino;

$R^3$ and $R^5$ (when joined together) can be taken together to form a heterocyclic ring of the formula:

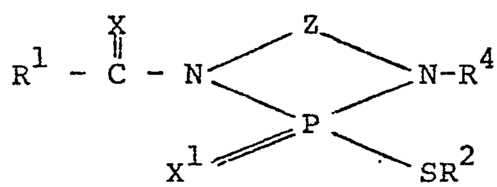

wherein Z is a $-CH_2CH_2-$ group, a $-CH_2CH_2CH_2-$ group, or $-CH_2CH_2CH_2CH_2-$ group;

X is oxygen or sulfur; and

$X^1$ is oxygen or sulfur.

2. A composition according to claim 1, wherein $R^1$ is hydrogen or a substituent other than alkadienyl and alkoxy-carbonyl (particularly $CH_3$,$C_2H_5$,$CH_3OCH_3$,cyclopropyl or $CF_3$), X is oxygen, one of $R^3$ and $R^4$ is hydrogen or $C_1$-$C_3$ alkyl and the other is $C_1$-$C_3$alkyl or 2-propenyl and $R^5$ is $C_1$-$C_6$alkyl or 2-propenyl.

3. A composition according to claim 1, wherein $R^1$ is hydrogen, $C_1$-$C_{12}$alkyl, halo($C_1$-$C_6$)alkyl, ($C_1$-$C_4$alkoxy)carbonyl($C_1$-$C_6$alkyl), ($C_1$-$C_4$alkoxy)$C_1$-$C_6$alkyl, phenoxy$C_1$-$C_6$ alkyl, phenyl optionally substituted with nitro or halo, phenyl($C_1$-$C_5$)alkyl, $C_3$-$C_6$cycloalkyl, or $C_3$-$C_6$alkenyl; $R^3$ is $C_1$-$C_3$alkyl or $C_3$-$C_6$alkenyl, $R^4$ is hydrogen or $C_1$-$C_3$ alkyl and $R^5$ is $C_1$-$C_6$alkyl or $C_3$-$C_6$alkenyl.

4. A composition according to claim 1, wherein $R^1$ is ($C_1$-$C_6$alkoxy)carbonyl or $C_5$-$C_{17}$alkadienyl.

5. A composition according to claim 1, wherein $R^1$ is hydrogen, methyl, ethyl, methoxymethyl, cyclopropyl or trifluoromethyl, $R^2$ is $C_3$-$C_4$alkyl, $R^3$ is $C_1$-$C_2$alkyl or $C_3$alkenyl, $R^4$ is hydrogen or methyl and $R^5$ is hydrogen, methyl or ethyl.

6. A composition according to claim 1, wherein (1) $R^1$ is hydrogen, $R^2$ is 1-methylethyl or 1-methylpropyl, $R^3$ is methyl, $R^4$ is hydrogen, $R^5$ is methyl, X is oxygen and $X^1$ is oxygen, (2) $R^1$ is hydrogen, $R^2$ is 1-methylpropyl, $R^3$ is methyl, $R^4$ is hydrogen, $R^5$ is methyl, X is sulfur and $X^1$ is oxygen, (3) $R^1$ is hydrogen, $R^2$ is 1-methylpropyl, $R^3$ is methyl, $R^4$ is hydrogen, $R^5$ is ethyl, X is oxygen and $X^1$ is oxygen or (4) $R^1$ is methyl, trifluoromethyl, methoxymethyl, or cyclopropyl, $R^2$ is 1-methylpropyl, $R^3$ is methyl, $R^4$ is hydrogen, X is oxygen and $X^1$ is oxygen.

7. A composition according to claim 1, wherein the active component comprises a compound of the formula:

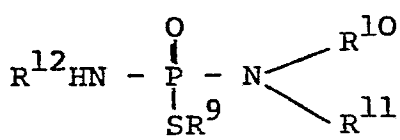

wherein $R^9$ is $C_3$-$C_6$alkyl;
$R^{10}$ is hydrogen or methyl;
$R^{11}$ is $C_1$-$C_3$alkyl or allyl; and
$R^{12}$ is $C_1$-$C_3$alkyl or allyl.

8. A composition according to claim 7, wherein $R^9$ is $C_3$-$C_4$ alkyl, $R^{10}$ is hydrogen, $R^{11}$ is methyl and $R^{12}$ is methyl.

9. A composition according to the claims 1 to 8, wherein the active component is present in an amount of from 0.1 to 99.9%, preferably 1 to 99%, by weight of the composition, the composition preferably being in the form of granules containing 0.1 to 25% by weight of one or more of said compounds.

10. A method of protecting living plant matter against deterioration due to attack by pests in the form of phytopathogenic fungi, acarids, insects and/or nematodes, which method comprises applying directly to the pests, or to the locus to be protected from the pests, one or more compounds according to any one of Claims 1 - 8, the plant matter being that which is or yields a vendible agronomic crop.

11. A method for the preparation of a compound according to Claim 1, wherein $R^1$ is hydrogen, which comprises (1) formylating a compound of the formula:

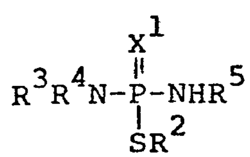

(where $R^2$, $R^3$, $R^4$, $R^5$ and $X^1$ are defined in Claim 1) by reaction with formic acetic anhydride, preferably in the presence of an inert solvent and preferably at a temperature in the range from $-10^oC$ to $100^oC$ or (2) hydrolyzing a compound of the formula:

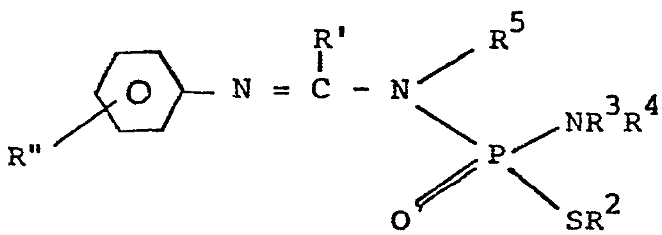

(where $R^2$, $R^3$, $R^4$ and $R^5$ are as defined in Claim 1, R' is hydrogen or alkyl and R" is hydrogen or one or more ring-substituents, and then recovering the desired product in substantially pure form, the hydrolysis preferably being carried out at a temperature from -10°C to 100°C.

12. A method for the preparation of a compound according to Claim 1, wherein $R^1$ is other than hydrogen, which comprises contacting (1) an acyl halide of the formula:

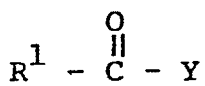

(where $R^1$ is as defined in Claim 1 but is not hydrogen and Y is chlorine or bromine), (2) a pyridine of the formula:

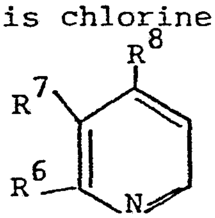

(where $R^6$ and $R^7$ - when not joined - are hydrogen; $R^6$ and $R^7$ - when joined - form the B ring of quinoline; $R^8$ - when not joined to $R^7$ - is hydrogen, amino, mono- or di-$(C_1-C_6)$ alkylamino or a nitrogen-containing $(C_2-C_6)$heterocyclic ring bonded at nitrogen to the pyridine ring; and $R^7$ and $R^8$ - when joined - form the B ring of isoquinoline) and (3) a compound of the formula:

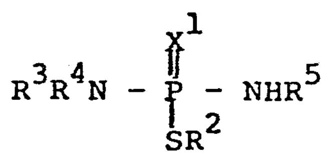

(where $R^2$, $R^3$, $R^4$, $R^5$ and $X^1$ are as defined in Claim 1), the contacting of (1), (2) and (3) being preferably carried out at a temperature from -20°C to 100°C and preferably being carried out in the presence of an inert solvent.

13. A method for the preparation of a compound according to Claim 1, wherein $R^1$ is other than hydrogen, which comprises reacting a compound of the formula:

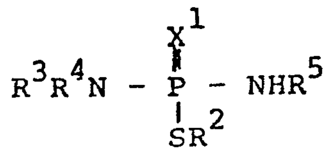

(where $R^2$, $R^3$, $R^4$, $R^5$ and $X^1$ are defined in Claim 1) with (1) a compound of the formula:

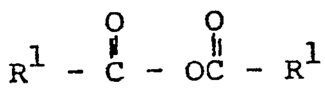

(where $R^1$ is as defined in Claim 1 but is not hydrogen) or (2) aluminum chloride and a compound of the formula:

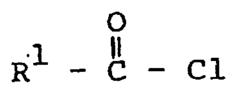

(where $R^1$ is as defined in Claim 1 but is not hydrogen), the reaction preferably being carried out at a temperature in the range from -10°C to 100°C and preferably in the presence of an inert solvent.

14. A composition according to one of the Claims 1 to 3, 5 and 6, the active component being a compound of the formula I (wherein $R^1$ = H) which has been obtained by the direct hydrolysis of a precursor and which, in consequence, is associated with by-product(s) resulting from such hydrolysis, the compount is preferably associated with less than 20% (more preferably less than 15%, even more preferably less than 5% and best of all less than 2%) by weight of (a), if present at all, said precursor plus (b) said by-product(s), the amount of (a) plus (b) being based on the combined weight of said compound, precursor and by-products.